(19) Europäisches Patentamt
European Patent Office
Office européen des brevets

(11) **EP 1 465 451 A2**

(12) **EUROPEAN PATENT APPLICATION**

(43) Date of publication:
**06.10.2004 Bulletin 2004/41**

(51) Int Cl.7: **H04Q 7/38**

(21) Application number: **04101320.2**

(22) Date of filing: **31.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **31.03.2003 JP 2003093187**

(71) Applicant: **NEC CORPORATION**
**Tokyo (JP)**

(72) Inventor: **Matsunaga, Yasuhiko**
**Tokyo (JP)**

(74) Representative: **Betten & Resch**
**Patentanwälte,**
**Theatinerstrasse 8**
**80333 München (DE)**

(54) **communication terminal, base station, server, network system, and handover method**

(57)     At least, a priority P of a connection for each wireless system, and a connection initiation wireless-link quality threshold Q1 are set and kept in a wireless terminal as a connection policy by the user wireless system by wireless system. Also, notified information received from the wireless systems enables these kinds of the information to be set dynamically. The wireless terminal selects and connects to the wireless system in the order of a high priority, out of the wireless systems of which the wireless link quality is equal to or more than Q1, and of which a flag F1 was set to ON.

FIG. 1

## Description

## BACKGROUND OF THE INVENTION

The present invention relates to a communication terminal, a base station, a server, a network system, and a handover method in a wireless system, and more particularly to a technique of selection of, connection to, and disconnection from a system in a terminal connectable to a plurality of wireless systems.

In general, in a wireless system such as a wireless LAN (Local Area Network) and a mobile telephone, a wireless terminal makes communication with other wireless terminal and a terminal of a wire network via a wireless base station. A communication form also exists that is called an ad hoc mode in which each of fellow wireless terminals directly receives/transmits wireless signals from/to the other; however it is left out of consideration in the present invention. An area that one wireless base station covers is limited, whereby the wireless terminal performs a handover of appropriately switching over to the neighboring wireless base stations as it migrates for aiming at continuing the communication.

Normally, in a case of the handover within the identical wireless system of which a system identifier that a radio undertaker defines, a frequency band, a modem technique, etc. are the same, by mainly comparing a quality of a wireless link between the wireless terminal and one of a plurality of wireless base stations with a quality between the wireless terminal and another base station, the wireless base station of which the wireless link quality is most excellent is selected to perform the handover. The handover within the identical wireless system is a technique already-and-well established, which was described as an example of algorithm in the non-patent document 1.

On the other hand, in a case where the wireless terminal migrates between the different wireless systems, a criterion of the handover is often governed by a priority for the above wireless system set by a user rather than the wireless link quality. Also, as a rule, a timing at which the handover between the wireless systems is executed is limited to a time of starting the wireless terminal, or a case where the wireless terminal migrated from the outside of a range of the wireless system within the range, and it is rare that the wireless system is switched over during communication. As a known art relating to the handover between the wireless systems, there are the non-patent documents 2, 3, and 4.

In the non-patent document 2 was shown a method that the user of the wireless LAN terminal automatically pre-registered the system name (Service Set ID in the IEEE Standard 802.11) of the connectable wireless LANs in the order of a priority to set information, which was employed for authentication and encryption in the wireless link layer, together therewith responding to necessity. In this case, it is at the time of starting the wireless LAN terminal, and at the time that the wireless LAN terminal migrated from the outside of the service range of the wireless LAN within the service range of anyone of the already-registered wireless LANs that the wireless LAN system having the highest priority is selected for connection according to this priority.

In the handover between systems in accordance with this technique, as long as the wireless link can be established, no link quality is evaluated furthermore, and a connection to the wireless system having the highest priority is always made. Accordingly, there is no problem as long as the user is in a standstill state, and almost no fluctuation in the wireless link quality exists; however the problem existed that a frequent link disconnection and re-connection occurred in a case where the wireless link quality between the wireless terminal and the wireless system in connection often deteriorated to the degree that the link was impossible to maintained, with the user's migration. Also, even though the wireless link quality between the wireless terminal and the wireless LAN having a higher priority was improved sufficiently, with the wireless terminal's migration, as long as the wireless terminal is not disconnected from the wireless LAN in connection, the problem existed that it was not switched over to the wireless LAN having a higher priority.

In the reference document 3 was shown a method of automatically selecting the Public Land Mobile Network at the time of starting the mobile telephone terminal, or at the moment that it migrated from the outside of the service range of the mobile telephone within its range. At this moment, the terminal firstly attempts a connection to the system of the Home Public Land Mobile Network (HPLMN) with which the user made a contract. In a case where the terminal was not able to connect to the HPLMN, it next attempts a connection to the system of the Public Land Mobile Network described in the "User Controlled PLMN Selector" field in the USLM (Universal Subscriber Identity Module) within the terminal, and further attempts a connection to the system of the Public Land Mobile Network described in the "Operator Controlled PLMN Selector" field. In a case where no connectable system of the Public Land Mobile Network is still found through the above-mentioned steps, the system of the Public Land Mobile Network having a sufficient reception signal quality is randomly selected for connection, and in a case where no system of the Public Land Mobile Network having a sufficient reception signal quality is yet further found, the system of the Public Land Mobile Network is selected in the order of reception signal intensity.

In the handover between the systems in accordance with this technique, once a connection to the wireless system is made, re-selection of the system is not carried out until the wireless terminal migrates up to the outside of its service range, or the manual operation is performed by the user. Accordingly, similarly to the technique of the non-patent document 2, the problem existed that the frequent link disconnection and re-connection occurred in a case where the wireless link quality between the wireless terminal and the Home Public Land Mobile Network often deteriorated to the degree that the wireless link quality was impossible to maintain. Also, with the mobile telephone service, as a rule, the Home Public Land Mobile Network and the Public Land Mobile Network other than it differ in the accounting system for the user, whereby there is also the case that the user does not always desire the automatic connection to the Public Land Mobile Network automatically selected. With the technique of the non-patent document 3, however, the problem existed of selecting the wireless system automatically according to the above-mentioned procedure to attempt a connection.

In the non-patent document 4 was shown a method of selecting and re-selecting the wireless system of which the connection cost is lowest by periodically evaluating a connection cost function

$$fn (Bn, Pn, Cn) = wb \cdot ln (l/Bn) + wp \cdot ln (Pn)+ wc \cdot ln (Cn)$$

for a plurality of the wireless systems, with a link band parameter of a wireless system n taken as Bn, a power consumption parameter as Pn, and an accounting condition as Cn, employing weighting parameters wb, wp, and wc. As an example of the wireless system, were listed the mobile telephone having the GSM (Global System for Mobile Communication) technique, the wireless LAN, and an infrared network. No wireless link quality is included in the above-mentioned connection cost function, whereby it is at the time that a link to the existing wireless system was disconnected, or at the time that a link to a new wireless system was established that the handover is carried out.

With this non-patent document 4, was proposed a method of causing the terminal to have a time hysteresis for realizing stability of the handover, so that the next handover was carried out only if the elapse time after the handover was equal to or more than a specified value in order to prevent the frequent link disconnection and re-connection at the time of deterioration in the wireless link quality. In the non-patent document 4, however, the user has to manually set the weighting parameters of the above-mentioned connection function, whereby the problem existed that it was difficult for the user having less knowledge about the network to set them. Also, the link band employs only a physical velocity of the link, whereby the problem existed that the portion was not reflected that varied depending upon the operational situation such as the congestion situation of the network. Furthermore, no restriction was imposed on the number of the wireless system to which the links can be simultaneously established, whereby the problem existed that the power consumption of the wireless terminal resulted in augmenting as the number of the wireless system to which the links were established increased.

Also, with the non-patent document 4, in switching the systems of which the switching technique, the modulation technique, and the transmission medium are different respectively, there is the problem associated with different characteristics that respective systems have. For example, in the mobile telephone having the GSM technique, the stabilized telephone service can be offered because the circuit switching technique is employed even though the transmission velocity is low; however, in the wireless LAN, the stability of the telephone service lowers because the packet switching technique allowing for collision is employed even though the transmission velocity is fast. In a case of this example, the user who utilizes the telephone service sometimes desires the offer of the service by the mobile telephone having the GSM technique even though the wireless LAN is available. On the other hand, the user who employs the mobile telephone having the GSM technique to utilize the data transfer service desires to utilize the data communication service by immediately switching over to the wireless LAN if it becomes available. In such a manner, the problem exists that a control in strict conformity with the communication service that the user utilizes is impossible to take.

[NON-PATENT DOCUMENT 1]

G. P. Pollini, "Trends in Handover Design", IEEE Communications Magazine, March 1990, p82-p90"

[NON-PATENT DOCUMENT 2]

Microsoft Windows (R) XP Operating System, Wireless Zero Configuration Service, http://www.microsoft.com/technet/columns/cableguy/cg1102.a sp

[NON-PATENT DOCUMENT 3]

3 GPP (3rd Generation Partnership Projects), TS (Technical Specification) 22.011 "Service Accessibility", Section 3.2.2.2 At switch-on or recovery from lack of coverage, A) Automatic network selection mode.

[NON-PATENT DOCUMENT 4]

Helen J. Wang, et al., "Policy-Enabled Handoffs Across Heterogeneous Wireless Networks", 2nd IEEE Workshops on Mobile Computing and Applications (WMCSA '99), New Orleans, LA, February 1999.
As mentioned above, the problem existed in the conventional handover technique between the wireless systems that the frequent link disconnection and re-connection occurred due to the wireless link quality between the wireless terminal and the wireless system in connection, and that the switching to the wireless system having a higher priority was not automatically carried out.

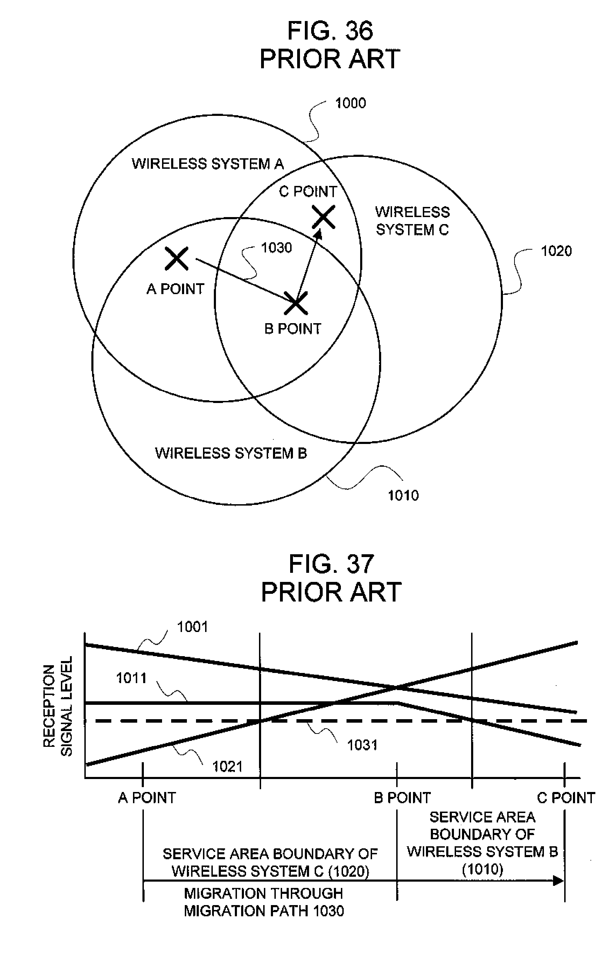

The problem that the switching to the wireless system having a higher priority was not automatically carried out will be explained in details by employing Fig. 36 and Fig. 37. In Fig. 36, wireless systems A, B, and C exist, and 1000, 1010, and 1020 indicate areas in which the stabilized communication service can be offered from the wireless system A, B, and C respectively. Herein, it is assumed that the user switched on the power source of his/her terminal to initiate the communication at an A point, and migrated to a C point via a B point as shown by a migration path 1030. Also, it is assumed that the user's connection priority for the wireless communication system A, the wireless communication system B, and the wireless communication system C rises in that order.

Also, Fig. 37 is a view that schematically illustrates the levels of the reception signal to be received in the user's terminal at the time that the user migrated according to the migration path 1030. In the figure, 1001, 1011, and 1021 indicate the reception levels of the wireless communication system A, B, and C respectively. Also, the signal level to be shown by the signal level 1031 is taken as a minimum reception signal level necessary for making the stabilized communication.

In such a situation, at first, a case is considered where the user migrates from the A point up to the B point. The wireless systems A and B are connectable at the A point where the user switches on the power source of his/her terminal, and the user's terminal connects to the wireless system B because the wireless system B is higher than the wireless communication system A in terms of the connection priority. As the user's terminal migrates according to the migration path 1030, when it enters the domain in which the stabilized communication service can be received from the wireless system C, the reception signal level from the wireless system C exceeds the signal level 1031.

On the other hand, the reception signal level of the wireless system B at witch the connection was made at the time point that the user switched on the power source of his/her terminal has also already exceeded the signal level 1031, whereby it is possible to make the stabilized communication. At this moment, the user desires to immediately carry out the connection switching (handover) to the wireless system C if the situation comes that the stabilized communication service can be received from the wireless system C having a higher connection priority, to which the connection was impossible to make at the time point that he/she switched on the power source of his/her terminal. In the prior art, however, there is no possibility of the handover to the wireless communication system C because the stabilized communication can be received from the wireless system B.

Furthermore, when the wireless terminal migrates from the B point up to the C point, it crosses over 1010 that is a service area boundary of the wireless system B, and the reception signal level from the wireless system B falls below the signal level 1031. In the prior art, in this time point, it retrieves again the wireless system from which the stabilized communication service can be received. At this moment, the wireless system A and the wireless system C are detected as a candidate for the connection system, and the handover to the wireless system C having a higher priority is carried out based upon the connection priority.

In order to cause the user's connection priority to be compatible with the stabilized communication service, originally, it is desirable that, at the time point that it crossed over 1020 that was a service area boundary of the wireless system C during the migration to the B point from the A point, the handover is carried out to the wireless communication system C of which the connection priority is higher, and yet from which the stabilized communication service can be received. In the prior art, however, as mentioned above, there is no possibility of the handover to the wireless system C until it migrates from the B point up to the C point.

Also, in a case where accounting systems of respective wireless systems differ, the problem existed that the wireless system was automatically selected to attempt the connection even though the user did not always desire the automatic connection.

Also, in a case of making a conditioned determination of the handover between the systems by combining a link band, power consumption, an accounting condition, etc. of each wireless system, the user has to manually set the way these are combined, whereby the problem existed that it was difficult for the user having less knowledge about the network to set them, and that the dynamic operational status of the network was impossible to reflect.

**SUMMARY OF THE INVENTION**

The present invention has an objective of stably realizing the handover between the wireless systems responding to connection policy information such as the priority of the wireless system and the advisability condition of the automatic connection to be set by the user, and the wireless link quality between the wireless terminal and each wireless system.

Another objective of the present invention is to impose restrictions on the number of the wireless links that can be simultaneously established from the wireless terminal to restrain the power consumption of the wireless terminal, and to dynamically incorporate the operational situation of the network such as the congestion status for reflecting it in the conditioned determination of the handover.

Yet another objective of the present invention is to solve the problem that no restriction is imposed on the number of the wireless system to which the links can be simultaneously established, resulting in that the power consumption augments as the number of the wireless system to which the link was established increases.

The communication terminal in accordance with the present invention is a communication terminal connectable to a plurality of communication systems, which is characterized in including communication system selection means for deciding the communication system to which to connect, based on a communication link quality and a connection policy including a priority of a connection set for each of said plurality of said communication systems.

The base station in accordance with the present invention is a base station for making communication with a communication terminal connectable to a plurality of communication systems, and yet adapted to decide the communication system to which to connect based on a communication link quality and a connection policy, which is characterized in including means for informing said communication terminal of said connection policy.

The server in accordance with the present invention is a server for making communication with a communication terminal connectable to a plurality of communication systems, and yet adapted to decide the communication system to which to connect based on a communication link quality and a connection policy, which is characterized in including means for informing said communication terminal of said connection policy.

The handover method between the communication systems in accordance with the present invention is a handover method between the communication systems, of a communication terminal connectable to a plurality of communication systems, which is characterized in including a communication system selection step of deciding the communication system to which to connect in said communication terminal, based on a communication link quality and a connection policy set for each of said plurality of said communication systems.

The network system in accordance with the present invention is a network system having a function that a communication terminal connectable to a plurality of communication systems makes the handover between the communication systems, which is characterized in that said communication terminal includes means for selecting the communication system to which the connection should be initiated according to a communication link quality and a connection policy.

The program in accordance with the present invention is a computer-readable program for controlling an operation of a communication terminal connectable to a plurality of communication systems, which is characterized in including a communication system selection step of deciding the communication system to which to connect, based on a communication link quality, and a connection policy set for each of said plurality of said communication systems.

Another program in accordance with the present invention is a computer-readable program for controlling an operation of a base station for making communication with a communication terminal connectable to a plurality of communication systems and yet adapted to decide the communication system to which to connect based on a communication link quality and a connection policy, which is characterized in including a step of informing said communication terminal of said connection policy.

Yet another program in accordance with the present invention is a computer-readable program for controlling an operation of a network management server for making communication with a communication terminal connectable to a plurality of communication systems and yet adapted to decide the communication system to which to connect according to a communication link quality and a connection policy, which is characterized in including a step of informing said communication terminal of said connection policy.

An operation of the present invention will be described. A configuration is made so that the communication system to which the connection should be initiated is selected responding to connection policy information such as the priority of each communication system and the advisability condition of the automatic connection to be set by the user of the communication terminal that is a user, and the communication link quality between the wireless terminal and each communication system. Doing so allows the handover between the communication systems to be stably realized. Furthermore, it becomes possible to impose restrictions on the number of the communication link that can be simultaneously established from the communication terminal for restraining the power consumption of the communication terminal, and to dynamically incorporate the operational situation of the network such as the congestion status for reflecting it in the conditioned determination of the handover.

## BRIEF DESCRIPTION OF THE DRAWINGS

This and other objects, features and advantages of the present invention will become more apparent upon a reading of the following detailed description and drawings, in which:

Fig. 1 is a view illustrating a connection relation between the wireless terminal and the wireless system in the first embodiment of the present invention;
Fig. 2 is a view illustrating an internal configuration of the wireless system 10 in the first embodiment of the present invention;
Fig. 3 is a view illustrating another internal configuration of the wireless system 10 in the first embodiment of the present invention;
Fig. 4 is a view illustrating an internal configuration of the wireless base station 20 in the first embodiment of the present invention;
Fig. 5 is a table illustrating wireless system information of which the wireless base station 20 makes the broadcast transmission to the wireless terminals under the control thereof in the first embodiment of the present invention;

Fig. 6 is a table illustrating wireless system registration information 500 of the wireless terminal 10 in the first embodiment of the present invention;

Fig. 7 is a flowchart at the moment that the wireless system registration means 66 of the wireless terminal 10 registers/updates the wireless system information in the first embodiment of the present invention;

Fig. 8 is a flowchart of the handover process that the handover determination means 65 of the wireless terminal 10 performs in the first embodiment of the present invention;

Fig. 9 is a flowchart of the wireless system automatic-connection process that the handover determination means 65 of the wireless terminal 10 performs in the first embodiment of the present invention;

Fig. 10 is a flowchart of the wireless system manual-connection process that the handover determination means 65 of the wireless terminal 10 performs in the first embodiment of the present invention;

Fig. 11 is a flowchart of the wireless system manual-disconnection process that the handover determination means 65 of the wireless terminal 10 performs in the first embodiment of the present invention;

Fig. 12 is a table illustrating wireless system registration information 501 of the wireless terminal 10 in the second embodiment of the present invention;

Fig. 13 is a flowchart of the wireless system automatic-connection process that the handover determination means 65 of the wireless terminal 10 performs in the second embodiment of the present invention;

Fig. 14 is a flowchart at the moment that the wireless system registration means 66 of the wireless terminal 10 registers/updates the wireless system information in the third embodiment of the present invention;

Fig. 15 is a flowchart of the handover process that the handover determination means 65 of the wireless terminal 10 performs in the fourth embodiment of the present invention;

Fig. 16 is a flowchart of the wireless system automatic-disconnection process that the handover determination means 65 of the wireless terminal 10 performs in the fourth embodiment of the present invention;

Fig. 17 is a table illustrating wireless system registration information 502 of the wireless terminal 10 in the fifth embodiment of the present invention;

Fig. 18 is a flowchart of the wireless system automatic-disconnection process that the handover determination means 65 of the wireless terminal 10 performs in the fifth embodiment of the present invention;

Fig. 19 is a table illustrating wireless system registration information 503 of the wireless terminal 10 in the sixth embodiment of the present invention;

Fig. 20 is a flowchart of the wireless system automatic-disconnection process that the handover determination means 65 of the wireless terminal 10 performs in the sixth embodiment of the present invention;

Fig. 21 is a flowchart at the moment that the wireless system registration means 66 of the wireless terminal 10 registers/updates the wireless system information in the seventh embodiment of the present invention;

Fig. 22 is a table illustrating wireless system registration information 504 of the wireless terminal 10 in the eighth embodiment of the present invention;

Fig. 23 is a flowchart at the moment that the connection status display means 67 of the wireless terminal 10 makes a notification of the connection/disconnection to/from the wireless system in the eighth embodiment of the present invention;

Fig. 24 is a table illustrating wireless system registration information 505 of the wireless terminal 10 in the ninth embodiment of the present invention;

Fig. 25 is a flowchart of the wireless system initial-authentication process that the handover determination means 65 of the wireless terminal 10 performs in the ninth embodiment of the present invention;

Fig. 26 is a table illustrating the wireless system information of which the wireless base station 20 makes the broadcast transmission to the wireless terminals under the control thereof in the tenth embodiment of the present invention;

Fig. 27 is one part of the flowchart at the moment that the wireless system registration means 66 of the wireless terminal 10 registers/updates the wireless system information in the tenth embodiment of the present invention;

Fig. 28 is one part of the flowchart at the moment that the wireless system registration means 66 of the wireless terminal 10 registers/updates the wireless system information in the tenth embodiment of the present invention;

Fig. 29 is a table illustrating the wireless system information of which the wireless base station 20 makes the broadcast transmission to the wireless terminals under the control thereof in the eleventh embodiment of the present invention;

Fig. 30 is a flowchart at the moment that the wireless system registration means 66 of the wireless terminal 10 registers/updates the wireless system information in the eleventh embodiment of the present invention;

Fig. 31 is a table illustrating the wireless system information of which the wireless base station 20 makes the broadcast transmission to the wireless terminals under the control thereof in the twelfth embodiment of the present invention;

Fig. 32 is a flowchart at the moment that the wireless system registration means 66 of the wireless terminal 10 registers/updates the wireless system information in the twelfth embodiment of the present invention;

Fig. 33 is a system view of the network management server in the embodiments of the present invention;

Fig. 34 is a sequence view in a case of directly transmitting the wireless system information from the network management server of Fig. 33 to the wireless terminal;

Fig. 35 is a view illustrating the operational flow of the network management server of Fig. 33;

Fig. 36 is a view for explaining the tasks associated with the prior art; and

Fig. 37 is a schematic view illustrating the reception signal levels of the wireless terminal in Fig. 36.

## DESCRIPTION OF THE EMBODIMENTS

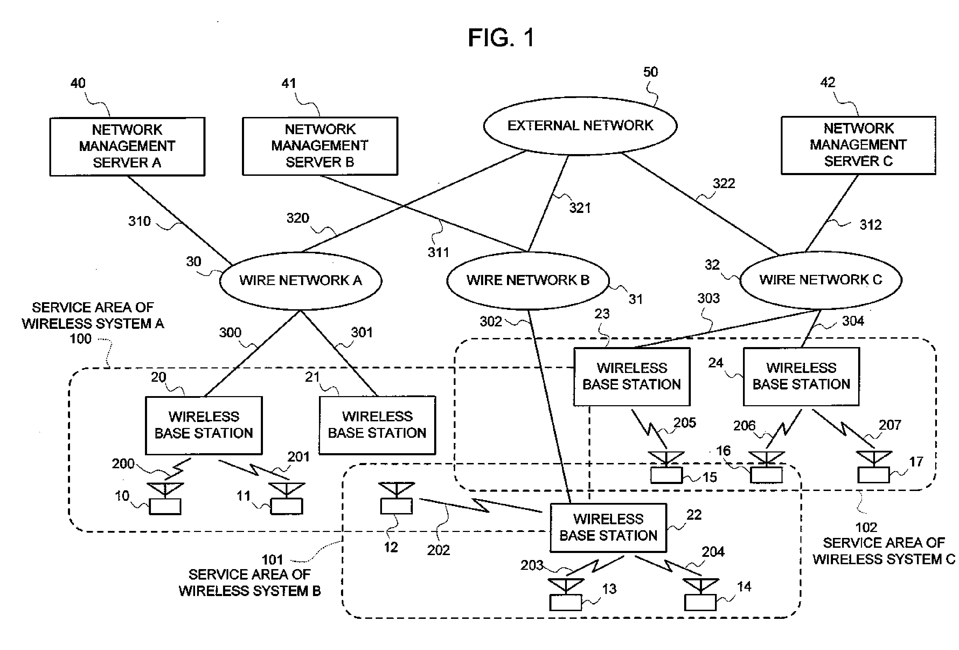

Hereinafter, embodiments of the present invention will be explained in details while a reference to the accompanied drawings is made. In Fig. 1 is illustrated a connection relation of a wireless terminal and a wireless system in a first embodiment of the present invention. The wireless system is configured of wire networks, wireless base stations, wire links, wireless links, and network management servers. As an example of the wireless system are listed a wireless LAN system in conformity with the IEEE 802.11 Standard, and a mobile telephone system in conformity with the 3 GPP Standard, etc., however it is not always limited hereto. Also, in a case where independent wireless system identifiers are assigned by different management organizations to the wireless systems that conform to the identical technical specification, they are regarded as a different wireless system respectively. In a case where respective wireless systems are close geographically, and one part thereof exists to overlap each other, the wireless terminal selects one or more wireless systems to connect to an external network, with the start and the migration thereof.

In a service area 100 of the wireless system A, wireless terminals 10 and 11, which are connected to a wireless base station 20, make data communication via wireless links 200 and 201. Wireless base stations 20 and 21 are connected to a wire network 30 of the wireless system A via wire links 300 and 301 respectively, and further connected to a network management server 40 and an external network 50 via wire links 310 and 320 respectively. In a service area 101 of the wireless system B, wireless terminals 12, 13 and 14, which are connected to a wireless base stations 22, make data communication via wireless link 203, 204, and 202. The wireless terminal 12 is connectable to any of the wireless base station 22 of the wireless system B and the wireless base station 21 of the wireless system A; however, herein, it is connected to the wireless base station 22 of the wireless system B.

The wireless base station 22 is connected to a wire network 31 of the wireless system B via a wire link 302, and further connected to a network wireless-resource management server 41 and the external network 50 via wire links 311 and 321 respectively. In a service area 102 of the wireless system C, a wireless terminal 15 that is connected to a wireless base station 23, and wireless terminals 16 and 17 that are connected to a wireless base station 24 make data communication via wireless links 206, 207, and 205. The wireless terminals 15 and 16 are connectable to any of the wireless base station 22 of the wireless system B and the wireless base stations 23 and 24 of the wireless system C; however, herein, they are connected to the wireless base stations 23 and 24 of the wireless system C respectively. The wireless base stations 23 and 24 are connected to a wire network 32 of the wireless system C via wire links 303 and 304, and further connected to a network management server 42 and the external network 50 via wire links 312 and 322 respectively.

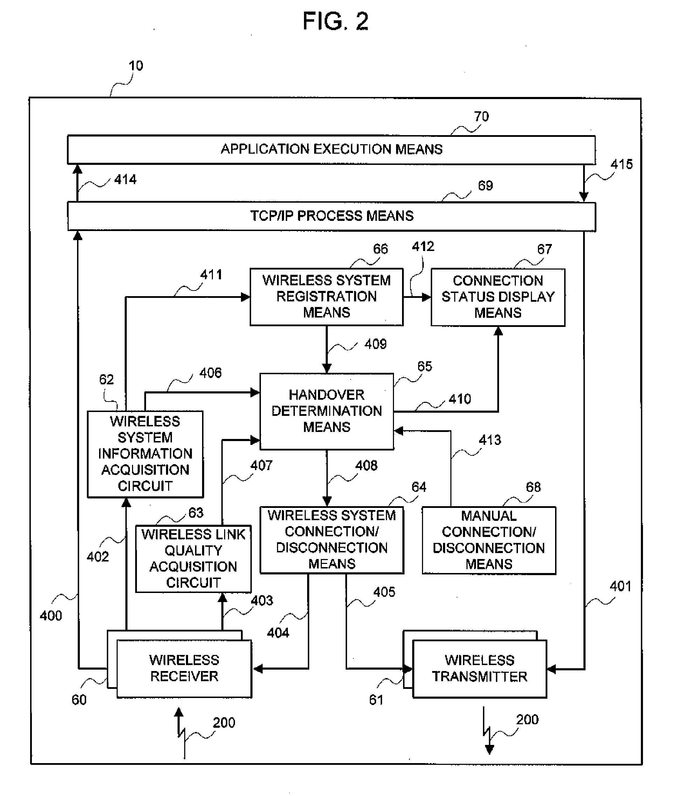

Next, in Fig. 2 is illustrated an internal configuration of the wireless terminal 10 in the first embodiment of the present invention. When a wireless receiver 60 receives wireless signals from the wireless link 200, it performs a modulation of the physical layer and a termination operation of the data link layer to output reception data 400, 402, and 403 to TCP/IP (Transmission Control Protocol/Internet Protocol) process means 69, a wireless system information acquisition circuit 62, and a wireless link quality acquisition circuit 63. Also, a wireless transmitter 61 performs the termination operation of the data link layer, and the modulation of the physical layer for transmission data 401 that was input, and transmits wireless signals to the wireless link 200.

In Fig. 2, the wireless receiver 60 and the wireless transmitter 61 are illustrated in plural; however one is enough for each thereof. In a case of requiring the connection to a plurality of the wireless systems simultaneously, a set of the wireless receiver and the wireless transmitter becomes a necessity responding to the simultaneous connection number. The wireless system information acquisition circuit 62 acquires wireless system information necessary for connection such as wireless system identifiers about which the wireless system informs, and output it to handover determination means 65 and wireless system registration means 66. A wireless link quality acquisition circuit 63 measures the wireless link quality between the wireless base station of the wireless system that exists within the service range, and the wireless terminal to output its result to the handover determination means 65.

Wireless system connection/disconnection means 64 gives an instruction for a connection/disconnection to/from the wireless system, and makes an alteration to various configurations for the wireless receiver 60 and the wireless transmitter 61 on receipt of a request by the handover determination means. The handover determination means 65 makes a determination of the handover based on information that was input. The wireless system registration means 66 stores wireless system information, a priority, a wireless link quality threshold of the automatic connection, etc. that were input from the user, and outputs wireless system registration information to the handover determination means 65 and connection status display means 67. The connection status display means 67 displays for the user information of the wireless systems, which are in connection, were already registered, and were not registered yet but are within the service range, together with the wireless link quality. Manual connection/disconnection means 68 outputs manual connection/disconnection instruction information to the handover determination means 65 on receipt of an instruction for the connection/disconnection to/from the wireless system by a user's manual operation. TCP/IP process means 69 and application execution means 70 transmit/receive data for executing communication applications on the wireless terminal.

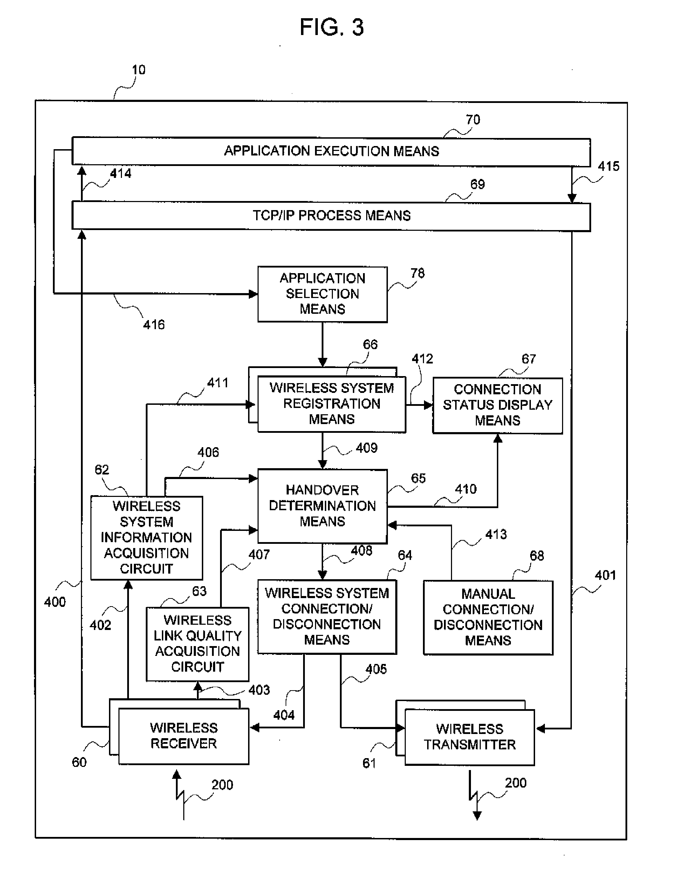

Also, so as to switch over a handover control according to the applications such as data transfer and voice communication, as shown in Fig. 3, application selection means 78, which is introduced into a block of Fig. 2, has the wireless system registration means 66 for each application under the control thereof. The application selection means 78 inputs application information under execution from the application execution means 70 to select the appropriate wireless system registration means. Additionally, a transfer path is decided unilaterally in a general terminal irrespective of the applications, whereby so as to introduce the handover control that corresponds to such applications, the wireless terminal needs to correspond so that an input/output interface can be designated application by application.

Further, the situation could exist that the connection destination wireless-systems to be requested by a plurality of the applications differ respectively, whereby a connection is impossible to make simultaneously. Accordingly, so as to switch over the handover control depending upon the applications, it is necessary to mediate a competition between the connection destination wireless-systems in such a manner that a priority is preset for the applications to select the connection destination wireless system designated by the application having a high priority.

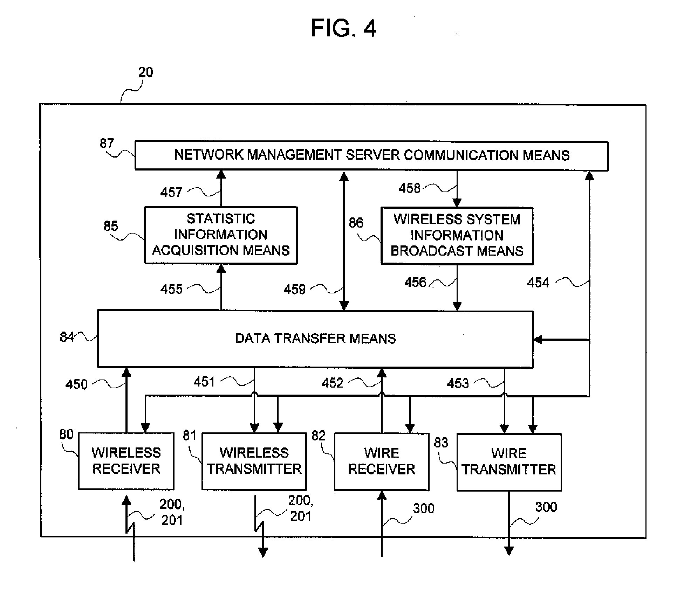

In Fig. 4 is illustrated an internal configuration of the wireless base station 20 in the first embodiment of the present invention. A wireless receiver 80 and a wireless transmitter 81 perform a modem process and a data link layer termination process of wireless signals to be transmitted/received via the wireless links 200 and 201. A wire receiver 82 and a wire transmitter 83 perform the modem process and the data link layer termination process of wireless signals to be transmitted/received via the wire link 300. Data transfer means 84 performs a data transfer process with the wireless receiver 80, the wireless transmitter 81, the wire receiver 82, and the wire transmitter 83.

Also, the data transfer means 84 outputs broadcast transmission data input from wireless system information broadcast means 86 to the wireless transmitter 81. Statistic information acquisition means 85 generates statistic data 457 from transmission/reception data information 455 to output it to network management server communication means 87. The wireless system information broadcast means 86 generates data for broadcasting the wireless system information such as the wireless system identifiers to the wireless terminals under the control thereof to output it to the data transfer means 84.

The network management server communication means 87 performs a protocol process for making communication with the network management server, and carries out the output of statistic information, the trap generation at the time of abnormality, and so on. Also, in a case where the network management server communication means 87 was requested to make an alteration to the setting of the wireless base station by the network management server, it outputs configuration information to the data transfer means 84, and the wireless transmitter/receiver 80/81 and the wire transmitter/receiver 82/83 to execute an alteration to various settings.

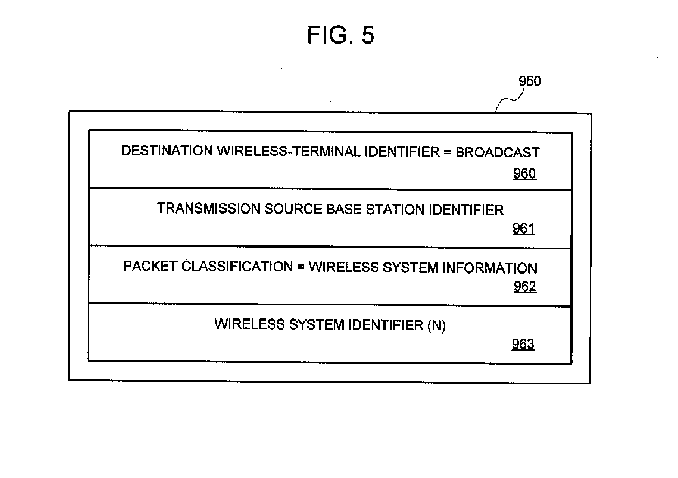

Fig. 5 is a view illustrating the wireless system information of which the wireless base station 20 makes the broadcast transmission to the wireless terminals under the control thereof in the first embodiment of the present invention. Wireless system information 950 is configured of a destination wireless-terminal identifier 960, a transmission source base station identifier 961, a packet classification field 962, and a wireless system identifier (N) 963. In a case of broadcasting the wireless system information, a broadcast address is set for the destination wireless-terminal identifier 960. An address of the wireless base station 20 is set for the transmission source base station identifier 961.

The packet classification field 962 is used for identifying the type of normal data and management data, and an identifier indicating the wireless system information is set herein. The wireless system identifier (N) 963 is a wireless system identifier to be set by a management organization. For example, with the wireless system in conformity with the IEEE 802.11 Standard, the Service Set Identifier (SSID) is equivalent to the wireless system identifier.

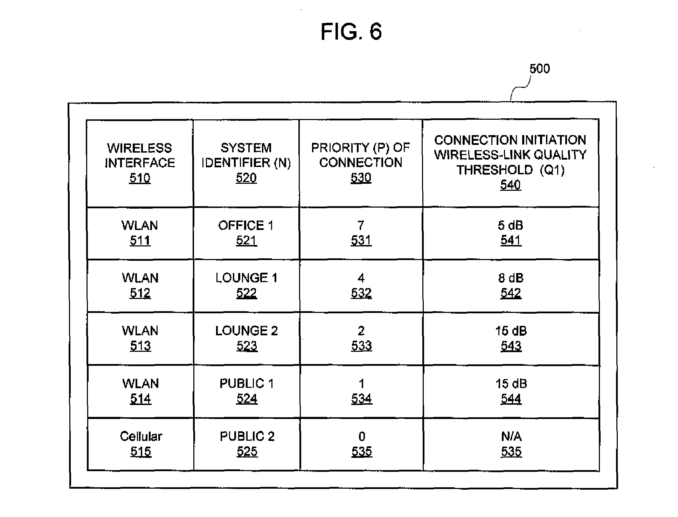

In Fig. 6 is illustrated wireless system registration information 500 of the wireless terminal 10 in the first embodiment of the present invention. Information to be registered is a wireless interface 510, a system identifier (N) 520, a priority (P) of a connection 530, and a connection initiation wireless-link quality threshold (Q1) 540. Interface information such as a WLAN (Wireless LAN), and a cellular telephone is set for the wireless interface 510. If the wireless terminal has only one wireless interface, the wireless interface 510 can be omitted. The system identifier of the wireless system is registered to the field of the system identifier (N) 520.

In case of Fig. 6, five kinds of the system identifiers, OFFICE1, LOUNGE1, LOUNGE2, PUBLIC1, and PUBLIC2 are registered. The priority of the connection to the wireless system designated by the user is registered to the priority (P) of connection 530. In case of Fig. 6, eight stages of the priorities ranging from 0 up to 7 are defined. The threshold information of the wireless link quality necessary for automatically initiating the connection is set for the connection initiation wireless-link quality threshold (Q1) information. As to a method of evaluating the link quality, there are various methods such as the method of employing a signal level, the method of employing a signal to noise level ratio, the method of employing a packet error rate, and the method of employing a retransmission probability.

Herein, as one example, with a receiving sensitivity (a reception signal level at which a packet loss rate amounts to 1%) of the wireless receiver taken as a reference, a difference between the level of the signal that the wireless terminal received from the wireless base station, and the receiving sensitivity is compared to the threshold Q1. The connection is made immediately after the wireless link becomes available in a case where Q1 is assumed to be next to 0 (zero), whereby the condition of the connection is eased. The condition of the initial connection is intensified when Q1 is assumed to be large, thus allowing the communication after the connection to be stabilized relatively.

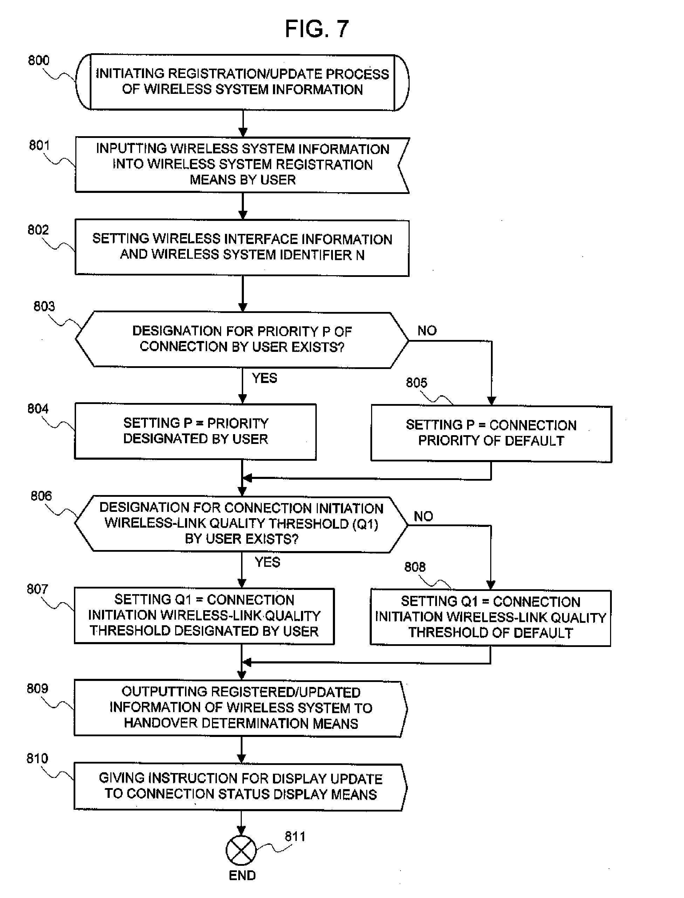

In Fig. 7 is illustrated a flowchart at the moment that the wireless system registration means 66 of the wireless terminal 10 registers/updates the wireless system information in the first embodiment of the present invention. When the wireless system information is input into the wireless system registration means 66 by the user (step 801), at first, it sets wireless interface information and a wireless system identifier N (step 802). Next, it checks whether a designation for the priority P of the connection by the user exists (step 803) to set its value (step 804) in a case where it exists, and to set the connection priority of a default in a case where it does not exist (step 805).

Also, the wireless system registration means 66 checks whether a designation for the connection initiation wireless-link quality threshold Q1 by the user exists (step 806) to set its value in a case where it exists (step 807), and to set the connection initiation wireless-link quality threshold of the default in a case where it does not exist (step 808). It outputs these kinds of the information that were set to the handover determination means 65 and the connection status display means 67 (steps 809 and 810).

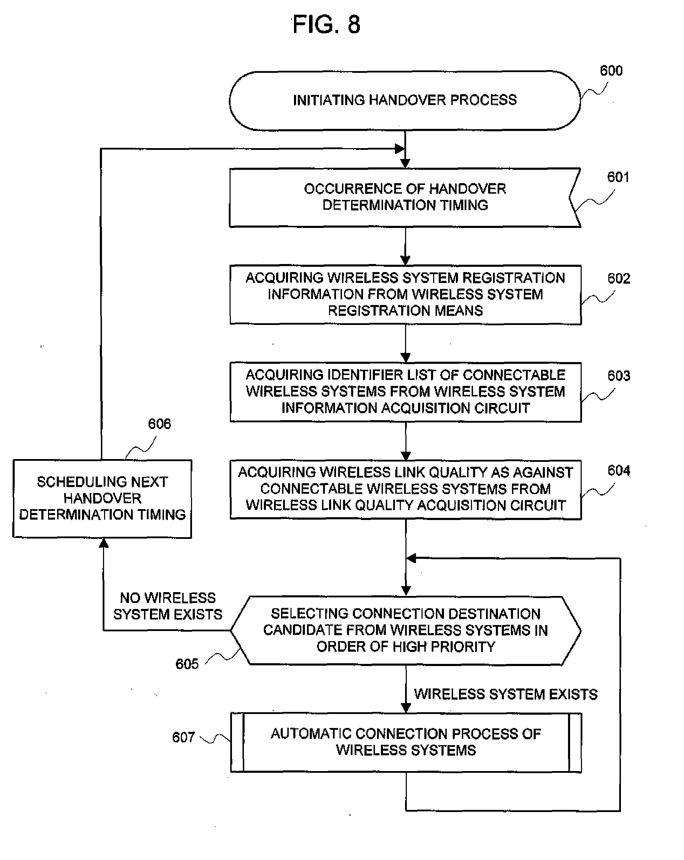

In Fig. 8 is illustrated a flowchart of the handover process that the handover determination means 65 of the wireless terminal 10 performs in the first embodiment of the present invention. The handover determination means 65 performs the determination of the handover periodically, and initiates a series of determination processes when determination timing comes (step 601). At first, it acquires wireless system registration information from the wireless system registration means 66 (step 602), acquires an identifier list of the connectable wireless systems from the wireless system information acquisition circuit 62 (step 603), and acquires the wireless link quality for the connectable wireless systems from the wireless link quality acquisition circuit 63 (step 604).

Next, the handover determination means 65 selects connection destination candidates from the wireless systems in the order of a high priority (step 605) to perform an automatic connection process of the wireless systems (step 607). After it performed this process for all wireless systems, it schedules the determination timing of the next handover (step 606), and comes to a standstill.

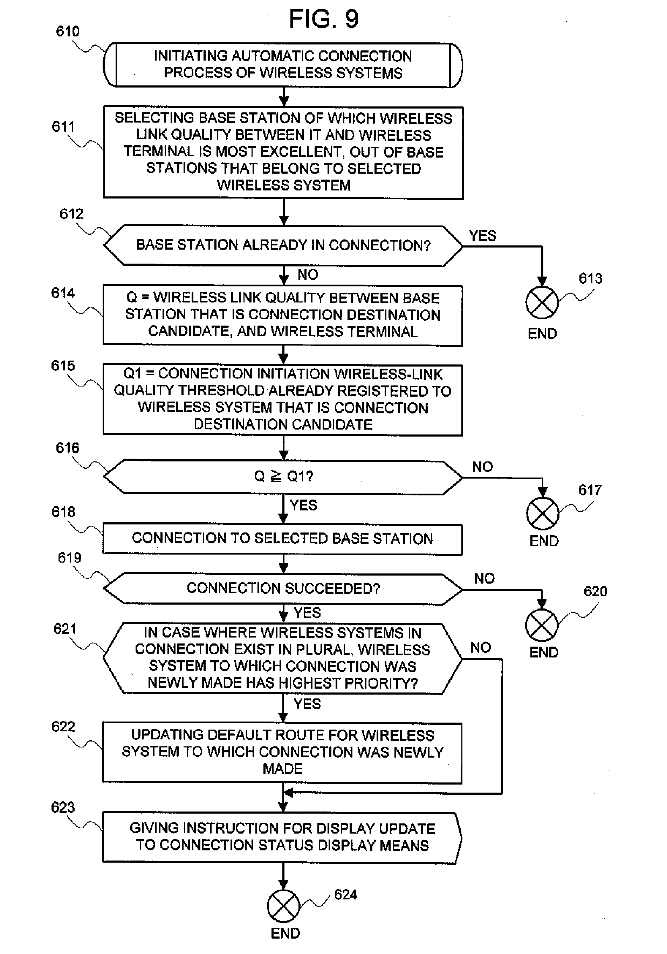

Fig. 9 is a flowchart illustrating the details of the wireless system automatic-connection process 607 in Fig. 8. At first, the handover determination means 65 selects a base station of which the wireless link quality between it and the wireless terminal is most excellent as a connection destination candidate, out of the base stations that belong to the selected wireless system (step 611). It checks whether the connection to this base station is already under way (step 612) to finish the process as it stands if it is under way (step 613). In a case where it is not under way, with the wireless link quality between the base station that is a connection destination candidate and the wireless terminal taken as Q (step 614), and the connection initiation wireless-link quality threshold already registered to the wireless system that is a connection destination candidate (step 615) as Q1, a magnitude relation of Q and Q1 is checked (step 616).

If Q is less than Q1, the process is finished (step 617). In a case where Q is equal to or more than Q1, the wireless system connection/disconnection means 68 is instructed to make a connection to the selected wireless base station (step 618), and it is checked whether the connection succeeded (step 619). In a case where the connection failed, the process is finished (step 620). In a case where the connection succeeded, and in addition hereto in a case where the wireless systems in connection exist in plural, and the wireless system to which a connection was newly made has the highest priority (step 621), a default route is updated for the wireless system to which a connection was newly made (step 622). Additionally, the so-called default route points to a pair of the address and the output interface that the above terminal sets for the transfer destination at the moment of transmitting a packet of which the destination address does not exist in a routing table. Normally, it is one interface that can be designated as a default route, and the wireless system having the highest priority is selected in a case where a plurality of the wireless systems can be simultaneously utilized. Finally, the connection status display means 67 is given an instruction for display update (step 623), and the process is finished (step 624).

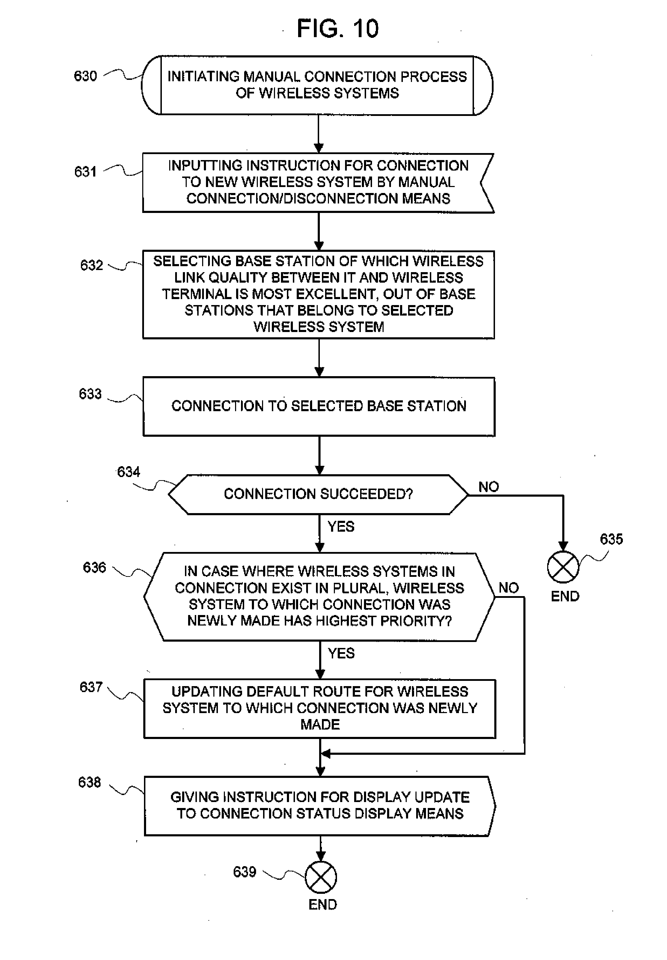

Fig. 10 is a flowchart of the wireless system manual-connection process that the handover determination means 65 of the wireless terminal 10 performs in the first embodiment of the present invention. In a case where the connection process by the user's manual operation is performed in addition to the automatic handover shown in Fig. 8 and Fig. 9, its process follows this flowchart. At first, in a case where the connection instruction to a new wireless system was input into by the manual connection/disconnection means 68 (step 631), the handover determination means 65 selects the base station of which the wireless link quality between the base station and the wireless terminal is most excellent as a connection destination candidate, out of the base stations that belong to the selected wireless system (step 632).

Next, it instructs the wireless system connection/disconnection means 64 to make a connection to the selected wireless base station (step 633), and checks whether the connection succeeded (step 634). It finishes the process in a case where the connection failed (step 535). In a case where the connection succeeded, and in addition hereto in a case where the wireless systems in connection exist in plural, and the wireless system to which a connection was newly made has the highest priority (step 636), it updates a default route for the wireless system to which a connection was newly made (step 637). Finally, the connection-status display means 67 is given an instruction for the display update (step 638), and the process is finished (step 639).

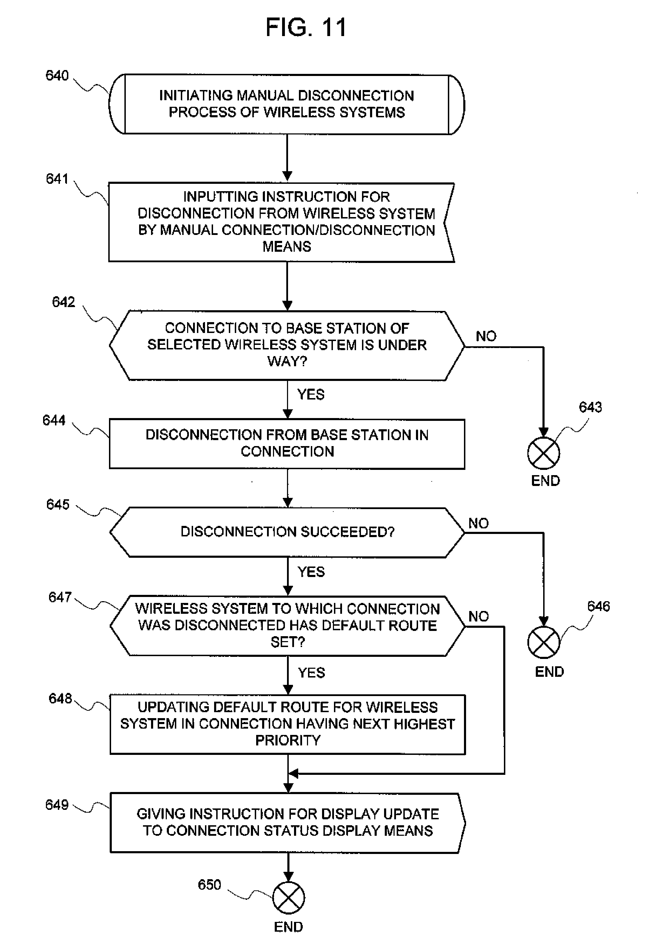

Fig. 11 is a flowchart of the wireless system manual-disconnection process that the handover determination means 65 of the wireless terminal 10 performs in the first embodiment of the present invention. At first, in a case where the wireless system disconnection instruction was input by the manual connection/disconnection means 68 (step 641), it is checked whether the connection to the base station of the designated wireless system is under way (step 642). If it is under way, the wireless system connection/disconnection means 68 is given an instruction for disconnection (step 644), and if it is not under way, the process is finished (643).

It is checked whether the disconnection failed (step 645), and in a case where the disconnection failed, the process is finished (step 646). In a case where the disconnection succeeded, an in addition hereto, in a case where the wireless system to which the connection was disconnected has the default route set (step 647), next, the default route is updated for the wireless system having a high priority (step 648). Finally, the connection status display means 67 is given an instruction for the display update (step 649), and the process is finished (step 650).

As mentioned above, in accordance with the present invention, setting the priority and the link quality threshold of the connection initiation wireless system by wireless system to execute the handover between the systems according hereto allows the handover between the wireless systems to be stably realized while the user's connection policy is reflected.

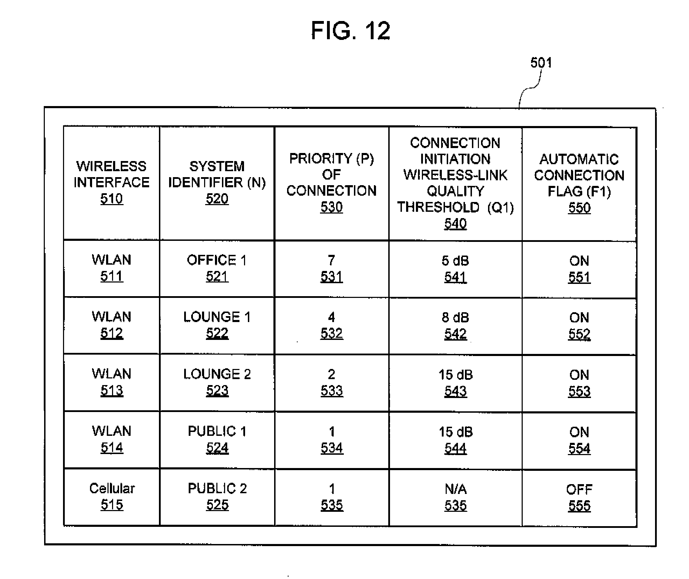

In Fig. 12 is illustrated wireless system registration information 501 of the wireless terminal 10 in a second embodiment of the present invention. In the wireless system registration information 501, automatic connection flag (F1) information is defined wireless system by wireless system in addition to the wireless system registration information 500 in the first embodiment shown in Fig. 6.

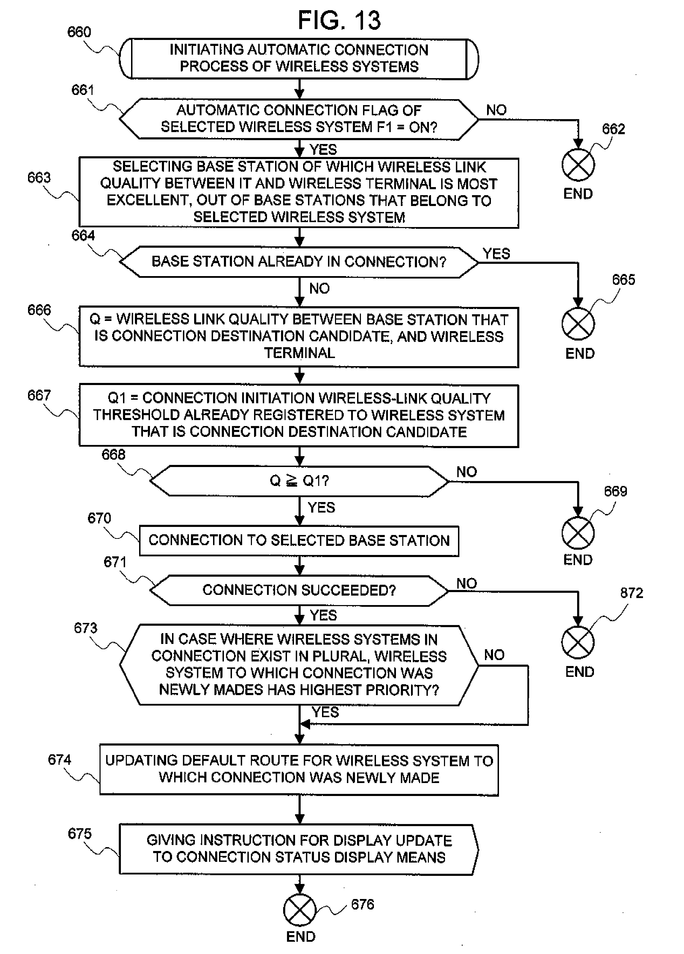

Fig. 13 is a flowchart of the wireless system automatic-connection process that the handover determination means 65 of the wireless terminal 10 performs in the second embodiment of the present invention. As to the entire process of the handover, it is similar to the flowchart of the first embodiment shown in Fig. 8. After the wireless system that was a connection destination candidate was selected, at first, it is checked whether the automatic connection flag F1 of the wireless system was set to ON (step 661). In a case where this flag F1 is not at ON, the process is finished as it stands (step 662). In a case where the flag F1 is at ON, hereinafter is performed the process similar to the wireless system automatic-connection process in the first embodiment shown in Fig. 9.

Defining the automatic connection flag of the wireless system in such a manner allows the automatic connection to the wireless system to be avoided in a case where the user does not always desire the automatic connection such as a case where the accounting systems of respective wireless system differ.

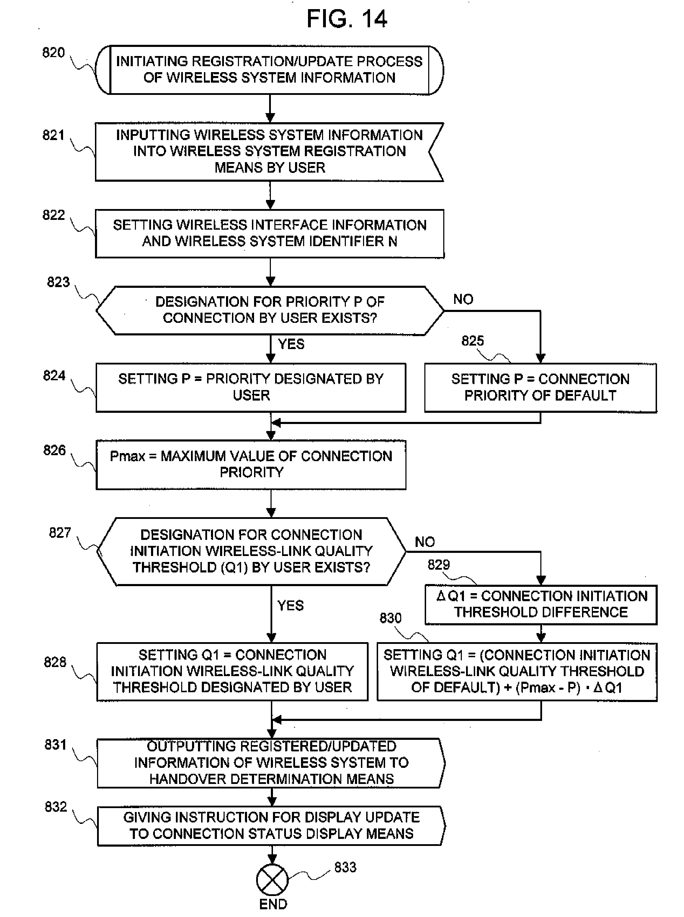

In Fig. 14 is illustrated a flowchart at the moment that the wireless system registration means 66 of the wireless terminal 10 registers/updates the wireless system information in a third embodiment of the present invention.

In this embodiment, in a case where no designation exists for the priority of the connection to the wireless system by the user, the setting is automatically made so that Q1 and the priority P have a negative correlation. After the registration information of the wireless system was input (step 821), the process up to the point where the priority is set (step 825) are similar to the flowchart of the wireless system information registration/update in the first embodiment shown in Fig. 7.

Next, Pmax is taken as a maximum value of the priority of the connection to the wireless system to be pre-decided in a fixed manner (step 826), and it is checked whether a designation for the connection initiation wireless-link quality threshold (Q1) by the user exists (step 827). In a case where the designation for Q1 by the user exists, the designated connection initiation wireless-link quality threshold is used as it stands (step 828). On the other hand, in a case where no designation exists, ΔQ1 is set for a connection initiation threshold difference to be pre-decided in a fixed manner (step 829), and Q1 for

(a connection initiation wireless-link quality

threshold of a default) + (Pmax - P) · ΔQ1)

(step 830).

After the setting of Q1 was completed, the registered/updated information of the wireless system is output to the handover determination means 65 (step 831) to give an instruction for the display update to the connection-status display means 67, and the process is finished (step 832).

In accordance with the present invention, automating the setting so that Q1 and the priority P have a negative correlation in such a manner allows the wireless system having a higher priority, of which the connection condition is eased all the more, to be selected more easily for connection.

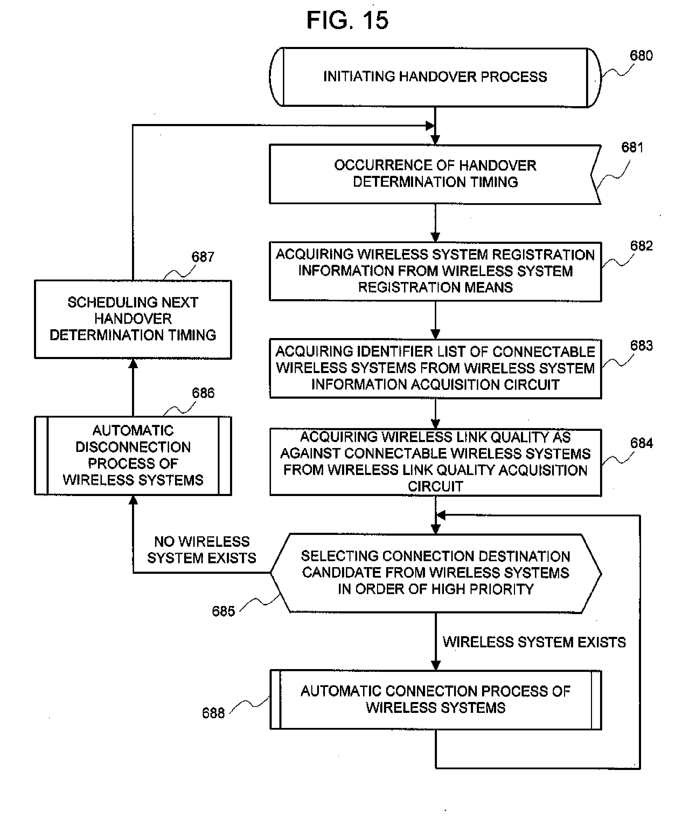

In Fig. 15 is illustrated a flowchart of the handover process that the handover determination means 65 of the wireless terminal 10 performs in a fourth embodiment of the present invention. In the fourth embodiment, in addition to the automatic connection process for the wireless system, in a case where the number of the above wireless systems in connection exceeded the maximum simultaneous-connection wireless-system number M, the wireless system are selected in the order of a low priority P to perform the automatic disconnection process of automatically disconnecting the connection to the selected wireless system.

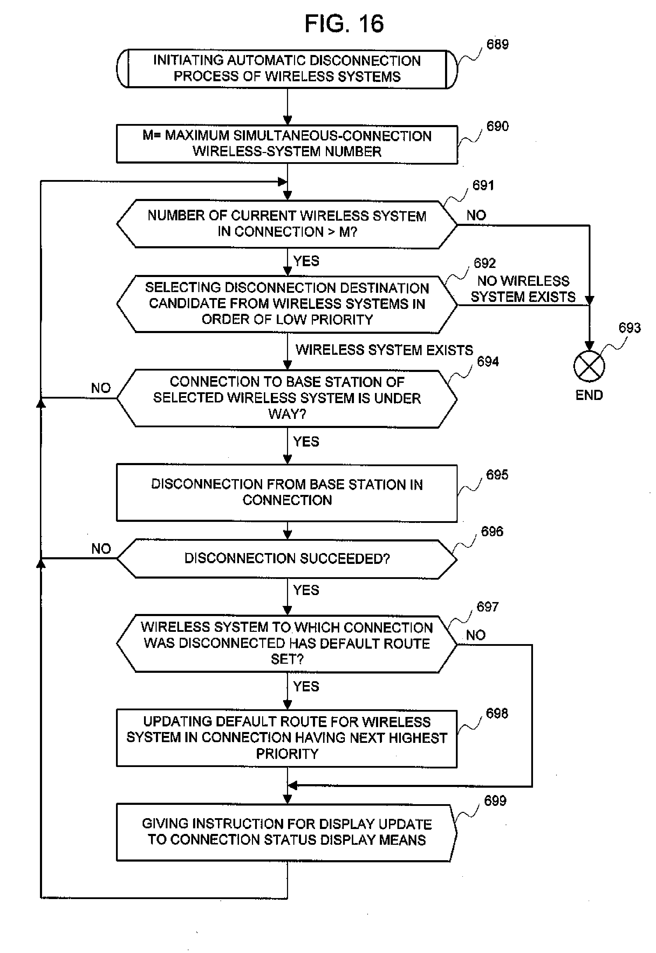

A difference between this handover process, and the handover process of the first embodiment shown in Fig. 8 lies in performing the automatic disconnection process of the wireless systems after the automatic connection process was performed for all wireless systems in the order of a high priority (step 686). In Fig. 16 is illustrated a flowchart of the wireless system automatic-disconnection process that the handover determination means 65 of the wireless terminal 10 performs in the fourth embodiment of the present invention. At first, the maximum simultaneous-connection wireless-system number M is pre-decided in a fixed manner (step 690) to check whether the current wireless system number in connection exceeded M (step 691). This wireless system number in connection increases by 1 (one) whenever the connection to the wireless system is newly made, and it decreases by 1 (one) when the connection is disconnected.

Like the wireless LAN, however, in a case where simultaneously with newly selecting the wireless system for connection, the connection to the existing wireless system is disconnected, no addition is operated. Herein, if the current wireless-system number in connection did not exceed M, the process is finished as it stands (step 693). In a case where it exceeded M, the disconnection destination candidates are selected from the wireless systems in the order of a low priority (step 692). In the step 692, the disconnection destination candidates are selected from other wireless systems than the already-selected wireless system in a loop process. If the connection to the base station of the selected wireless system is under way (step 694), the wireless system connection/disconnection means 64 is given an instruction for disconnecting the connection to the base station (step 695). In a case where the disconnection succeeded (step 696), further, it is checked whether the wireless system to which the connection was disconnected has the default route set (step 697), and in a case where it has the default route set, the default route is updated for the wireless system in connection having the next highest priority (step 698).

Finally, the connection status display means 67 is given an instruction for the display update (step 699), and the process returns to the step 691. For the wireless systems to which the connection is not disconnected with the wireless system automatic-disconnection process shown herein, the disconnection process is performed by the manual disconnection operation of the user, or in a case where the wireless link quality deteriorated to the degree that the wireless link was impossible to maintain.

Imposing restrictions on the maximum simultaneous-connection wireless-system number M in such a manner to automatically perform the disconnection process of the wireless systems in the order of a low priority in a case where this was exceeded allows a reduction in the power consumption of the wireless terminal to be realized.

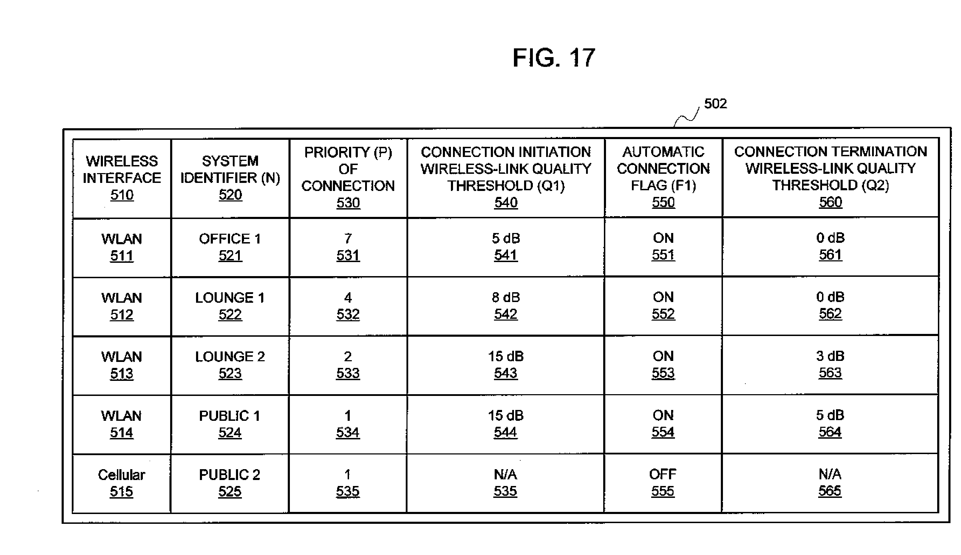

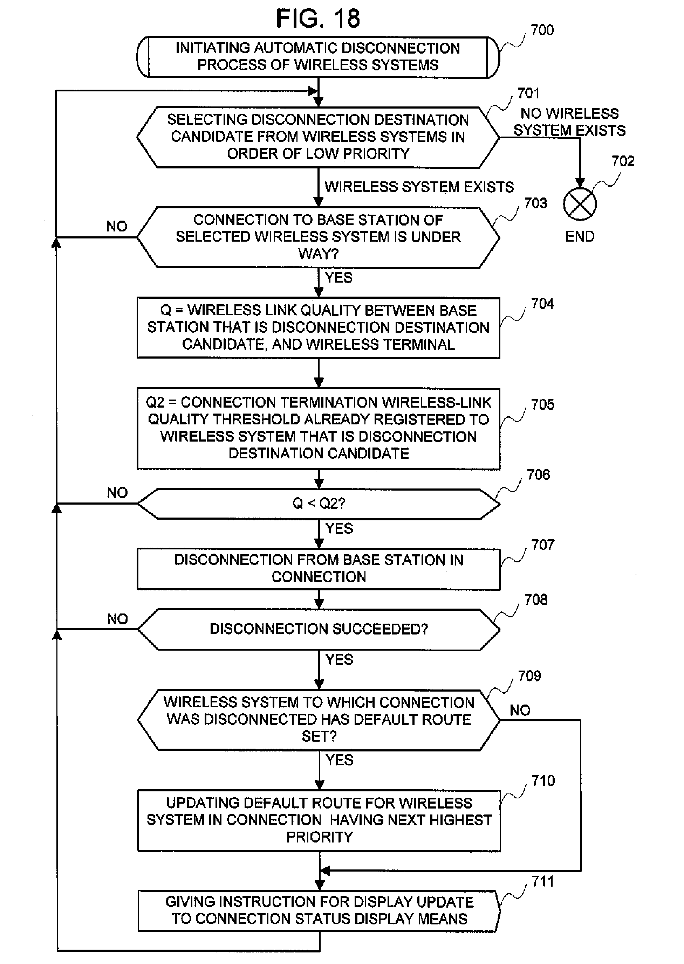

In Fig. 17 is illustrated wireless system registration information 502 of the wireless terminal 10 in a fifth embodiment of the present invention. In the wireless system registration information 502, connection termination wireless-link quality threshold (Q2) information 560 is defined wireless system by wireless system in addition to the wireless system registration information 501 in the second embodiment shown in Fig. 12. Fig. 18 is a flowchart of the wireless system automatic-disconnection process that the handover determination means 65 of the wireless terminal 10 performs in the fifth embodiment of the present invention.

At first, the disconnection destination candidates are selected from the wireless systems in the order of a low priority (step 701). In a case where all wireless systems were checked, the process is finished (step 702). In a case where the wireless system was selected, it is checked whether the connection to the base station of the selected wireless system is under way (step 703). In a case where the connection to the base station of the above wireless system is under way, the wireless link quality between the base station that is a disconnection destination candidate, and the wireless terminal is taken as Q (step 704), and the connection termination wireless-link quality threshold already registered to the wireless system that is a disconnection destination candidate as Q2 (step 705).

Next, in a case where Q is less than Q2 (step 706), the connection to the base station in connection is disconnected (step 707), and in addition hereto, in a case where the disconnection succeeded (step 708), and the wireless system to which the connection was disconnected has the default route set (step 709), the default route is updated for the wireless system in connection having the next highest priority (step 710). Finally, the connection status display means 67 is given an instruction for the display update (step 711) and the process returns to the step 701. In this embodiment, when Q2 is assumed to be large, the disconnection condition from the above wireless system is eased, thus allowing the switchover to the other wireless systems to be made easily.

On the other hand, when Q2 is lessened, and a difference between Q1 and Q2 is assumed to be large, the handover is stabilized, thus allowing the frequent disconnection and re-connection to be avoided also in a case where the wireless link quality varies largely.

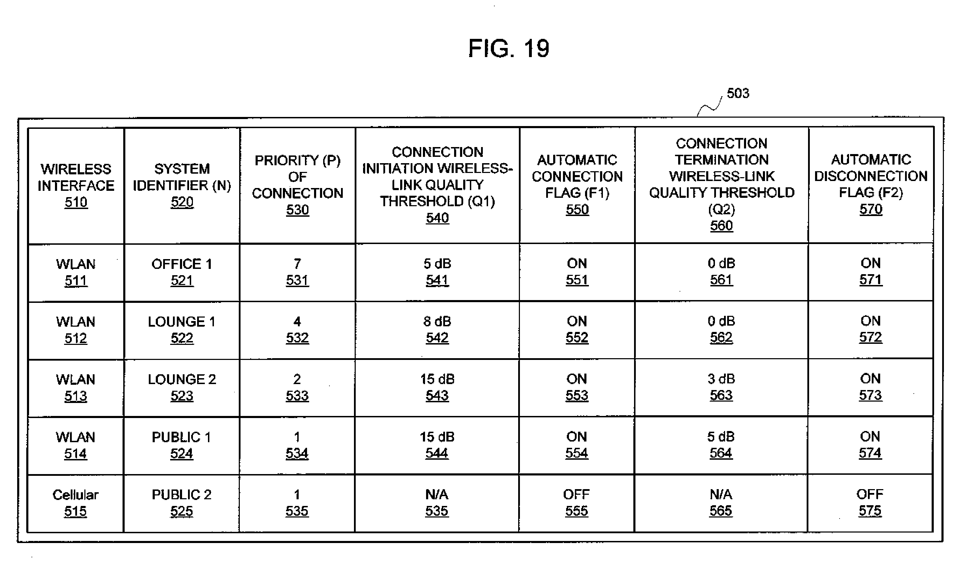

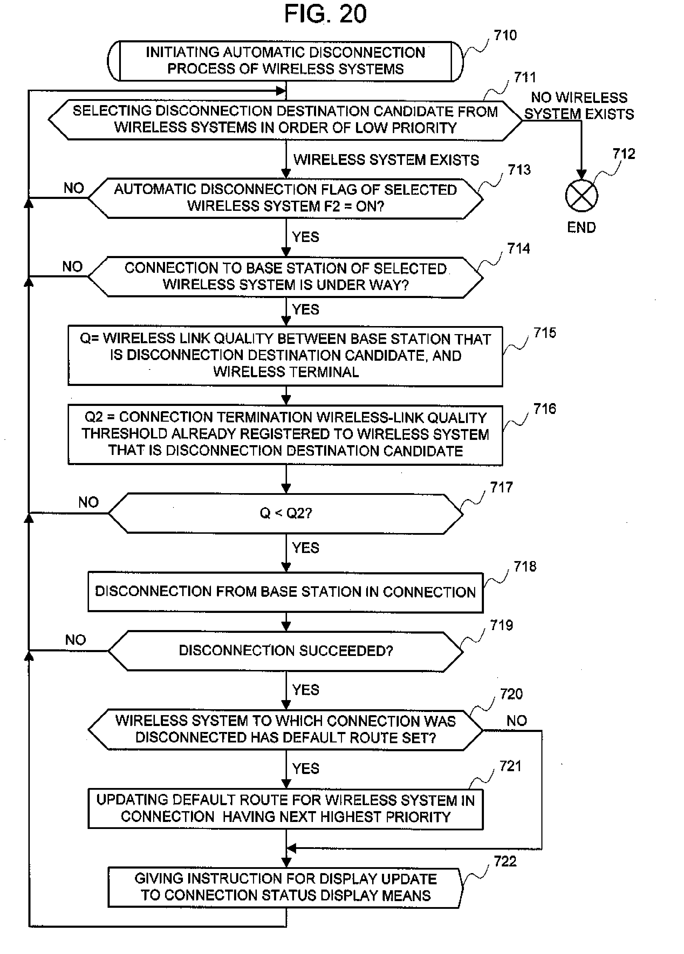

In Fig. 19 is illustrated wireless system registration information 503 of the wireless terminal 10 in a sixth embodiment of the present invention. In the wireless system registration information 503, automatic disconnection flag (F2) information 570 is defined wireless system by wireless system in addition to the wireless system registration information 502 in the fifth embodiment. Fig. 20 is a flowchart of the wireless system automatic-disconnection process that the handover determination means 65 of the wireless terminal 10 performs in the sixth embodiment of the present invention.

A difference between this flowchart, and the flowchart of the wireless system automatic-disconnection process of the fifth embodiment shown in Fig. 18 lies in checking in the step 713 whether the automatic disconnection flag (F2) of the above wireless system has was set to ON to perform the automatic disconnection process only in a case of ON. In a case where the automatic disconnection flag F2 was not set to ON, the connection to the wireless system is disconnected by the manual operation of the user, or it is disconnected at the first time when the wireless link quality deteriorated to the degree that the wireless link was impossible to maintain.

Defining the automatic disconnection flag of the wireless system in such a manner allows advisability of the automatic disconnection to be switched over responding to the subscriber's disconnection policy.

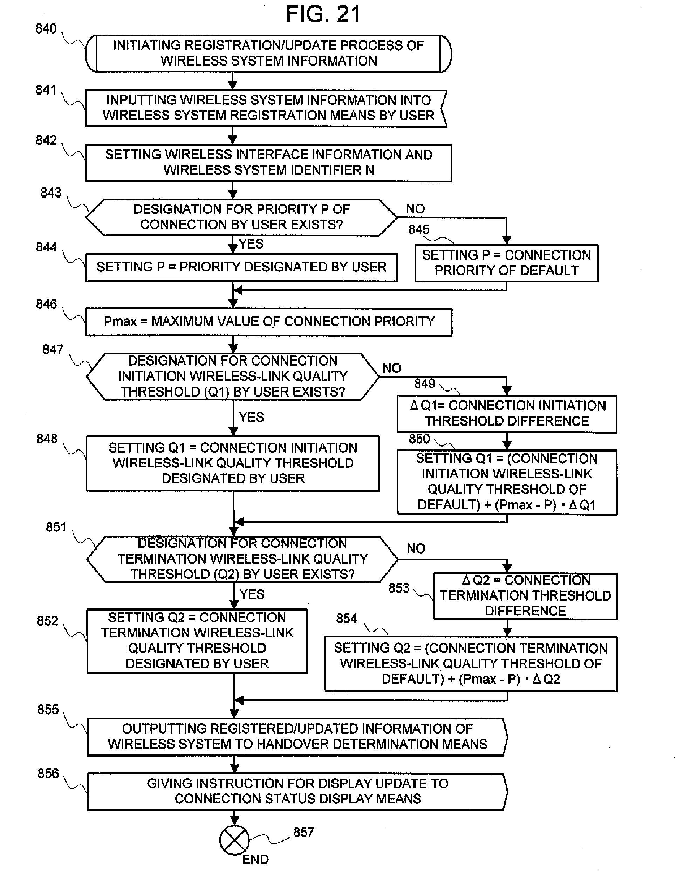

In Fig. 21 is illustrated a flowchart at the moment that the wireless system registration means 66 of the wireless terminal 10 registers/updates the wireless system information in a seventh embodiment of the present invention. A difference between this flowchart, and the registration/update flowchart of the wireless system information in the third embodiment of the present invention shown in Fig. 14 lies in making it a rule to make the automatic setting so that the connection termination wireless-link quality threshold Q2 and the priority P have a negative correlation in the steps subsequent to the step 851.

In this case, at first, it is checked whether a designation for the connection termination wireless-link quality threshold (Q2) by the user exists (step 851). In a case where the designation for Q2 by the user exists, the designated connection termination wireless-link quality threshold is used as it stands (step 852). In a case where no designation exists, ∆Q2 is set for a connection termination threshold difference to be pre-decided in a fixed manner (step 853), and Q2 for

(a connection termination wireless-link quality

threshold of a default) + (Pmax - P) · ∆Q2)

(step 854).

After the setting of Q2 was completed, the registered/updated information of the wireless system is output to the handover determination means 65 (step 855), the connection-status display means 67 is given an instruction for the display update, and the process is finished (step 856). In accordance with the present invention, automating the setting so that Q2 and the priority P have a negative correlation in such a manner allows the wireless system having a higher priority, of which the disconnection condition is eased all the more, to be given a longer connection time.

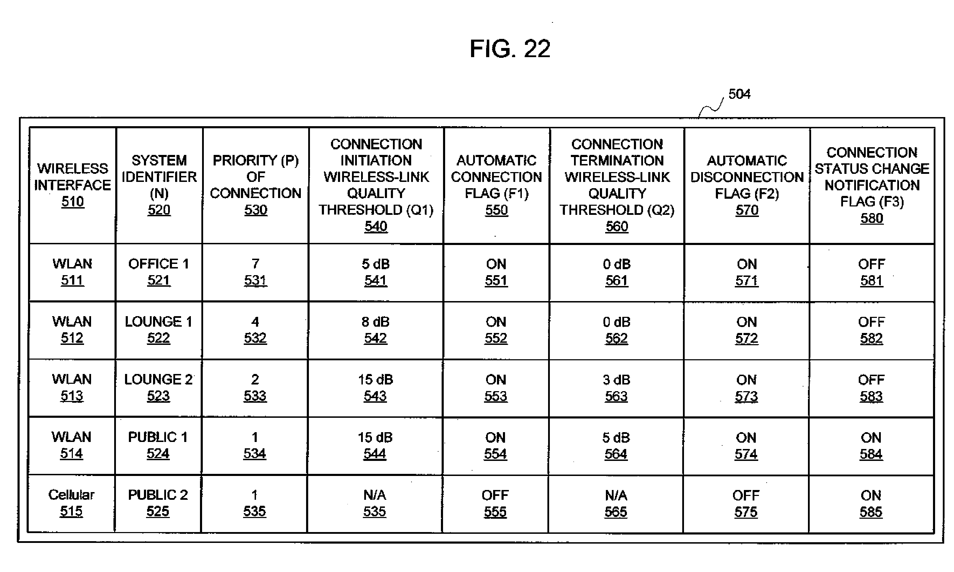

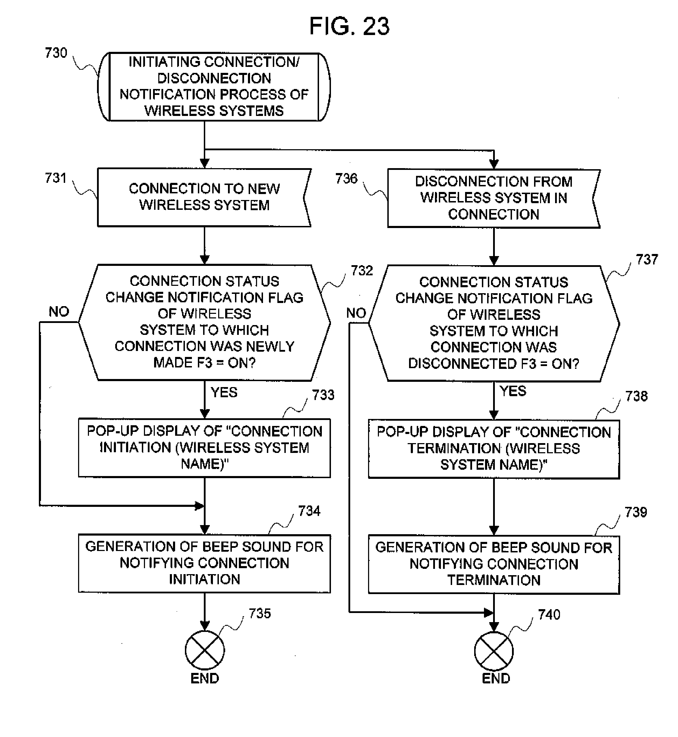

In Fig. 22 is illustrated wireless system registration information 504 of the wireless terminal 10 in an eighth embodiment of the present invention. In the wireless system registration information 504, connection status change notification flag (F3) information 580 is defined wireless system by wireless system in addition to the wireless system registration information 503 in the sixth embodiment. In Fig. 23 is illustrated a flowchart at the moment that the connection status display means 67 of the wireless terminal 10 makes a notification of the connection/disconnection to/from the wireless system in the eighth embodiment of the present invention. When the connection status display means 67 receives a notification of the connection to a new wireless system from the handover determination means 65 (step 731), it checks whether the connection status change notification flag F3 of the wireless system to which the connection was newly made is at ON (step 732).

In a case where F3 was at ON, the connection status display means 67 makes a pop-up display of "connection initiation (wireless system name)" on a screen of the wireless terminal (step 733), and further, causes the wireless terminal to generate a beep sound for notifying the connection initiation (step 734). On the other hand, in a case where the connection status display means 67 received a notification of the disconnection from the wireless system in connection from the handover determination means 65 (step 736), it checks whether the connection status change notification flag F3 of the wireless system to which the connection was disconnected is at ON (step 737). In a case where F3 was at ON, it causes the wireless terminal to make the pop-up display of "connection termination (wireless system name)" (step 738) and to generate the beep sound for notifying the connection termination (step 739).

Automating the handover between the wireless systems in such a manner, and explicitly notifying the generation of the handover to the user allows the handover that the user does not attempt to be prevented from being generated.

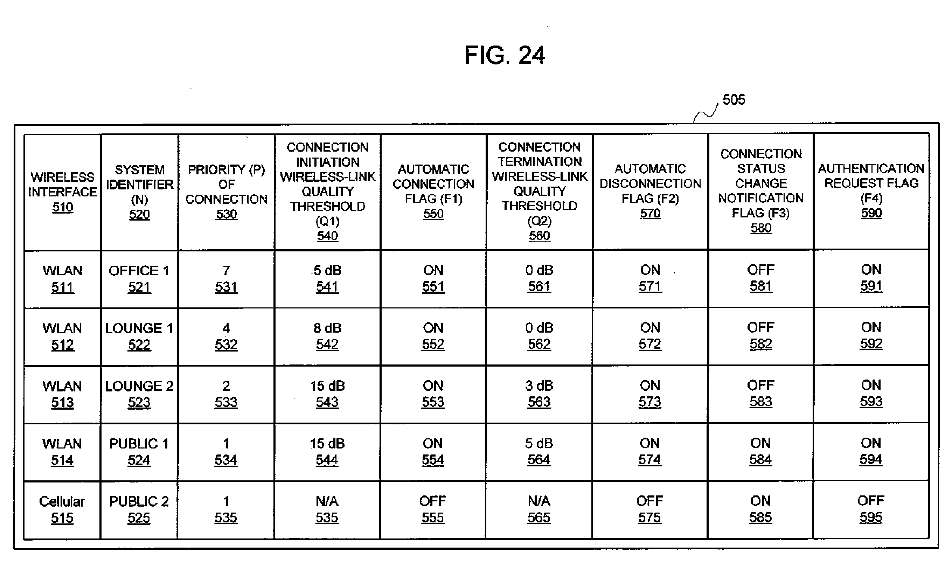

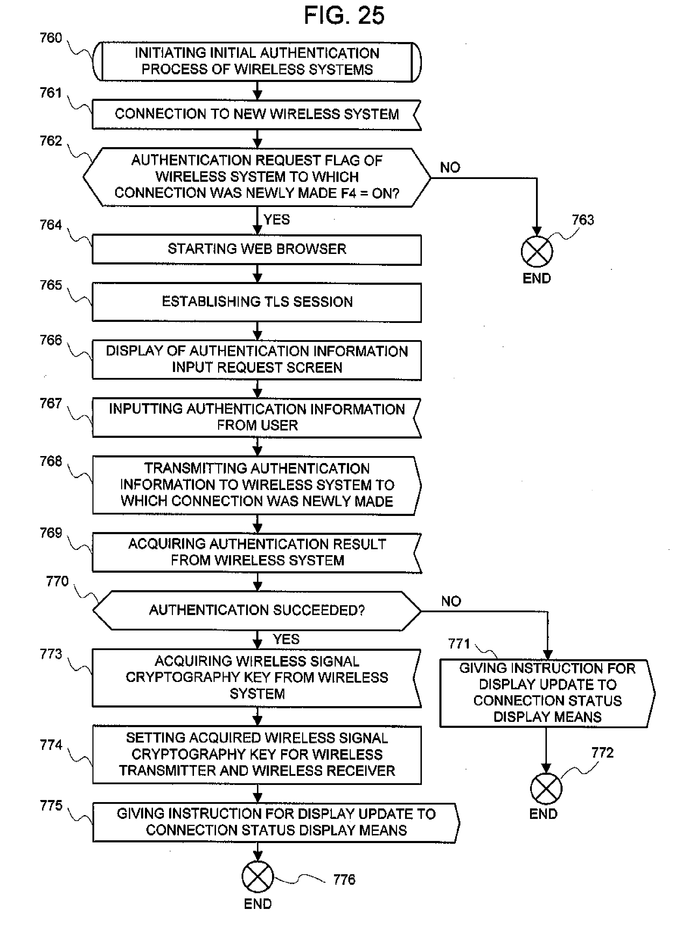

In Fig. 24 is illustrated wireless system registration information 505 of the wireless terminal 10 in a ninth embodiment of the present invention. In the wireless system registration information 505, authentication request flag (F4) information 590 is defined wireless system by wireless system in addition to the wireless system registration information 504 in the eighth embodiment. Fig. 25 is a flowchart of a wireless system initial-authentication process that the handover determination means 65 of the wireless terminal 10 performs in the ninth embodiment of the present invention.

At first, the connection to a new wireless system is made (step 761), and it is checked whether the authentication request flag F4 of the wireless system to which the connection was newly made is at ON (step 762). In a case where F4 was at ON, the handover determination means 65 starts a Web browser (step 764) to establish a TLS (Transport Layer Security) session, and to cipher a message that is transmitted/received hereafter (step 765). Next, it displays an authentication information input request screen (step 766), and when authentication information is input from the user (step 767), it transmits the authentication information to the wireless system to which the connection was newly made (step 768). For the transmitted authentication information, it acquires the authentication result from the wireless system (step 769). If the authentication is not successful (step 770), it gives the connection status display means 67 an instruction for the display update to the effect that the authentication failed (step 771), and finishes the process (step 772).

On the other hand, in a case where the authentication succeeded, further, it acquires a wireless signal cryptography key from the wireless system (step 773), and after it sets the acquired wireless signal cryptography key for the wireless transmitter 61 and the wireless receiver 60 (step 774), it gives the connection status display means 67 an instruction for the display update (step 775) to finish the process (step 776). Interlocking the automatic connection to the wireless system, and the authentication operation in such a manner allows the handover between the wireless systems to be realized smoothly.

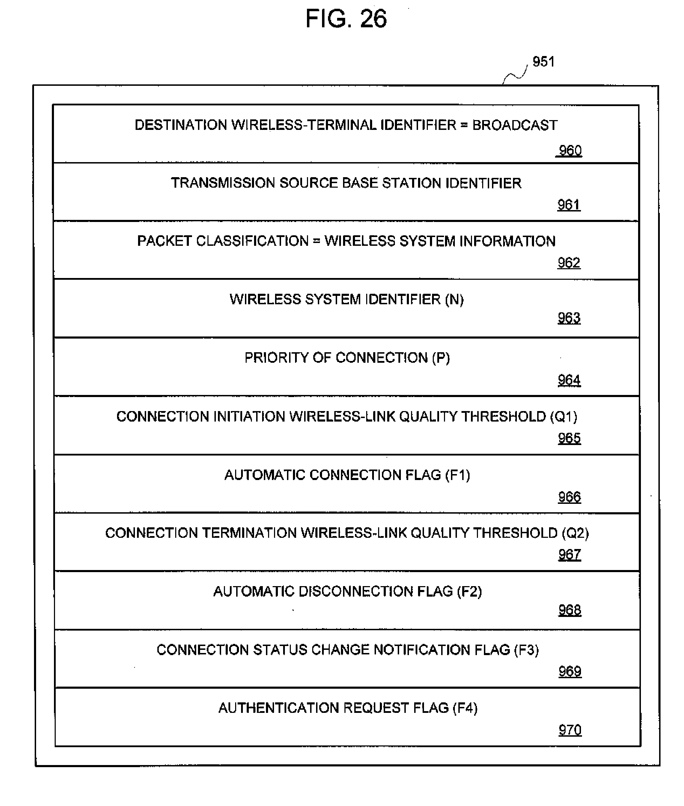

In Fig. 26 is illustrated wireless system information 951 of which the wireless base station 20 makes the broadcast transmission to the wireless terminals under the control thereof in a tenth embodiment of the present invention. In the wireless system information 951, priority (P) information of a connection 964, connection initiation wireless-link quality threshold (Q1) information 965, automatic connection flag (F1) information 966, connection termination wireless-link quality threshold (Q2) information 967, automatic disconnection flag (F2) information 968, connection status change notification flag (F3) information 969, and authentication request flag (F4) information 970 are defined in addition to the wireless system information 950 in the first embodiment shown in Fig. 5.

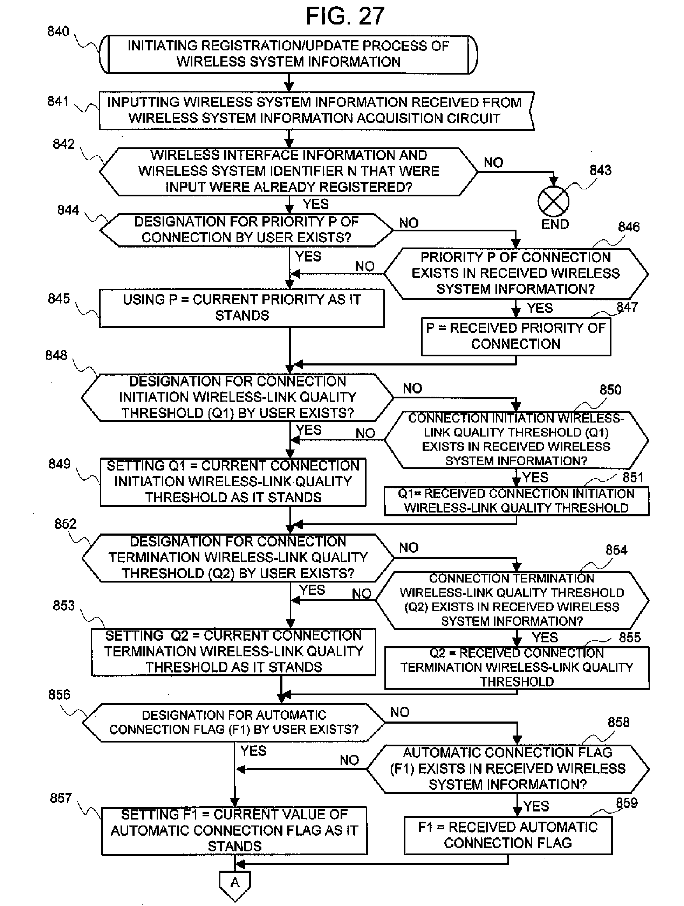

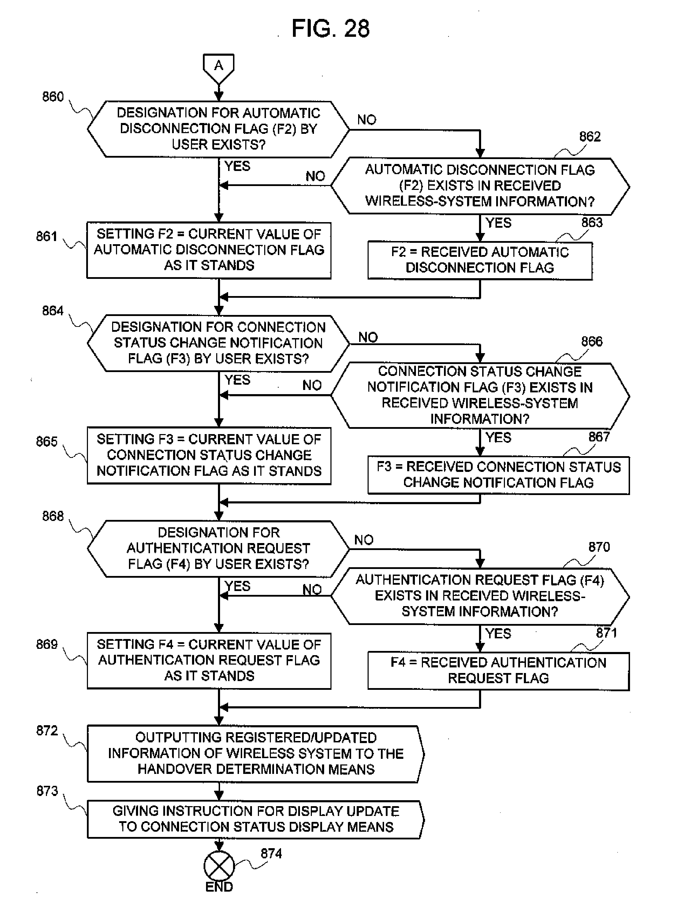

In Fig. 27 and Fig. 28 is illustrated a wireless system information registration/update operation flowchart at the moment that the wireless terminal received this wireless system information 501. When the wireless system information is input via the wireless system information acquisition circuit 62 (step 841), the wireless system registration means 66 checks whether the wireless interface and the wireless system identifier N that were input were already registered (step 842), and if they were not registered yet, it finishes the process (step 843). In a case where they were already registered, when the user did not designated the priority of connection P (step 844), and yet the priority P of the connection existed in the received wireless system information (step 846), the received priority value is set for P (step 847). In a case other than it, the current priority value is used as it stands (step 845).

Hereinafter, as to the connection initiation wireless-link quality threshold Q1 (steps 848 to 850), the connection termination wireless-link quality threshold Q2 (steps 851 to 855), the automatic connection flag F1 (steps 856 to 859), the automatic disconnection flag F2 (steps 860 to 863), the connection status change notification flag F3 (steps 864 to 867), and the authentication request flag F4 (steps 868 to 871), they are also processed similarly.

After the update process for all kinds of the wireless system registration information was completed, information of the wireless system is output to the handover determination means 65 (step 872), the connection status display means 67 is given an instruction for the display update (step 873), and the process is finished (step 874). In such a manner, in accordance with the present invention, it is possible to set each parameter of the handover between the wireless systems based on information received from the wireless systems, and to alleviate the user's labor for setting.

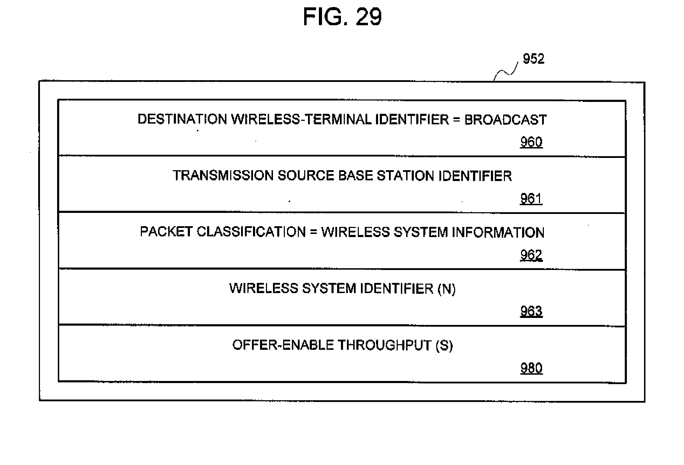

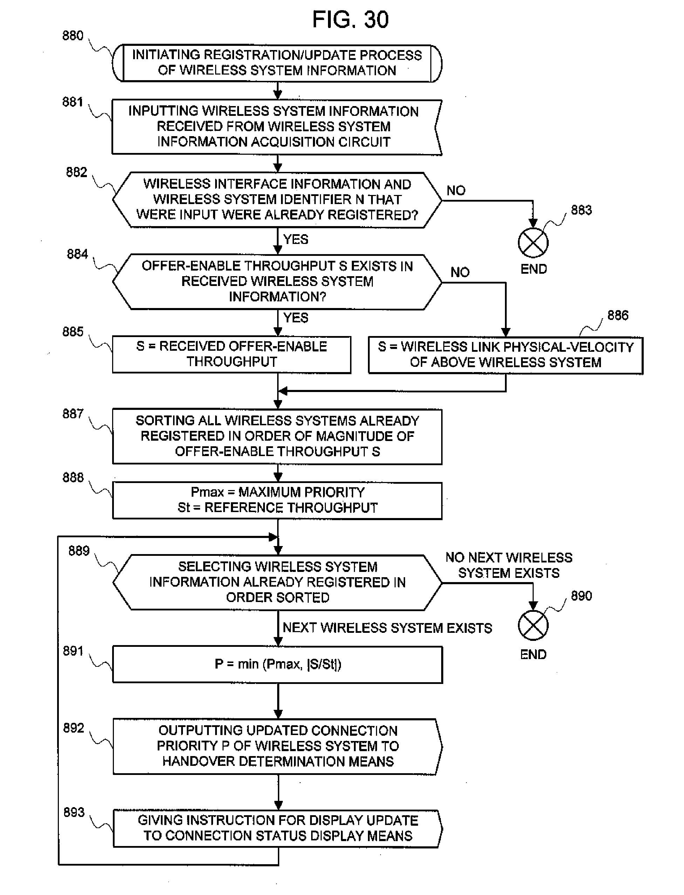

In Fig. 29 is illustrated wireless system information 952 of which the wireless base station 20 makes the broadcast transmission to the wireless terminals under the control thereof in the eleventh embodiment of the present invention. The wireless system information 952 includes offer-enable throughput (S) information 980 in addition to the wireless system information 950 in the first embodiment shown in Fig. 5. This offer-enable throughput S is a throughput that the wireless system management server sets for the wireless station based on the values measured at the wireless base station and the wire network, which is a value having the congestion situation of the network etc. reflected. Fig. 30 is a flowchart at the moment that the wireless system registration means 66 of the wireless terminal 10, on receipt of this wireless system information 952, registers/updates the wireless system information.

At first, when the wireless system information received from the wireless system information acquisition circuit 62 is input (step 881), the wireless system registration means 66 checks whether the wireless interface and the wireless system identifier N that were input were already registered (step 882), and if they were not registered yet, it finishes the process (step 883). In a case where they were already registered, it checks whether the offer-enable throughput S exists in the received wireless system information (step 884), if it exists, the received value is set for S (step 885), and if it does not exist, a wireless link physical-velocity of the wireless system is set for S (step 886).

Next, it sorts all wireless systems already registered in the order of magnitude of the offer-enable throughput S (step 887) to take a maximum priority as Pmax, and a reference throughput as St. Further, the wireless-system information already registered is selected in the order sorted (step 889) to compute and decide the value of the priority P as follows

$$P = \min (Pmax, |S/St|)$$

However, min (x, y) is a function for returning either x or y, whichever is a smaller value, and lzl is a minimum integer that does not exceed z. Finally, the updated connection priority P of the wireless system is output to the handover determination means 65 (step 892), and after the connection status display means 67 is given an instruction for the display update (step 893), the process returns to the step 889.

As mentioned above, in accordance with the present invention, it becomes possible to automatically set so that the higher the throughput is, the more highly the priority of connection is raised in the wireless terminal, based upon the offer-enable throughput of which the wireless system informed, i.e. the priority has a positive correlation as against the throughput.

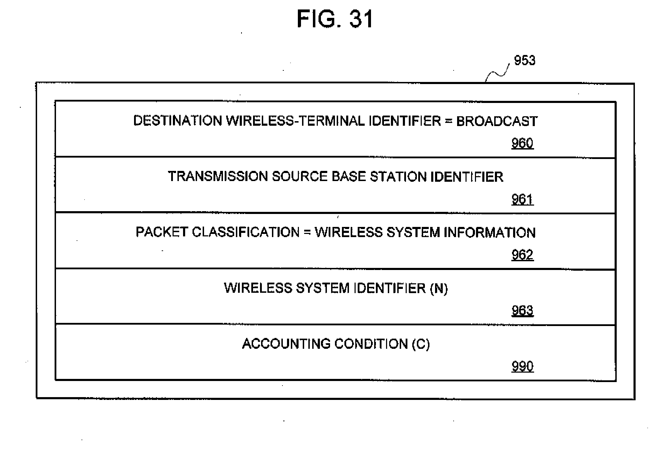

In Fig. 31 is illustrated wireless system information 953 of which the wireless base station 20 makes the broadcast transmission to the wireless terminals under the control thereof in a twelfth embodiment of the present invention. The wireless system information 953 includes accounting condition (C) information 990 in addition to the wireless system information 950 in the first embodiment shown in Fig. 5. The accounting condition, which is a value to be set wireless system by wireless system, is defined per the unit time, or the unit transmission/reception data quantity.

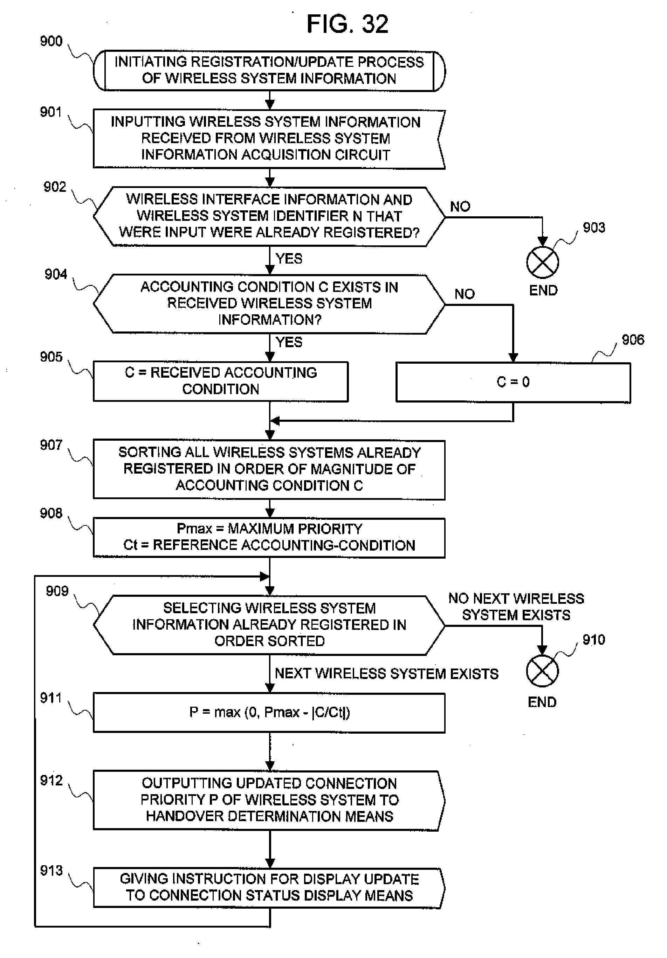

Fig. 32 is a flowchart at the moment that the wireless system registration means 66 of the wireless terminal 10, on receipt of this wireless system information 953, registers/updates the wireless system information. When the wireless system information received from the wireless system information acquisition circuit 62 is input (step 901), the wireless system registration means 66 checks whether the wireless interface and the wireless system identifier N that were input were already registered (step 902). If they were already registered, it checks whether the accounting condition C is included in the wireless system information received next (step 904), if it is included, the received accounting condition is set for C (step 905), and if it is not, C is set to 0 (zero) (step 906).

Further, it sorts all wireless systems already registered in the order of magnitude of the accounting condition C (step 907) to take the maximum priority as Pmax, and a reference accounting condition as Ct (step 908). It selects the wireless system information already registered in the order sorted (step 909) to decide the priority of connection P as follows.

$$P = \max (0, Pmax - |C/Ct|)$$

(step 911). However, max (x, y) is a function for returning either x or y, whichever is a larger value, and | z | is a minimum integer that does not exceed z.

Finally, the updated connection priority P of the wireless system is output to the handover determination means 65 (step 912), and after the connection status display means 67 is given an instruction for the display update (step 913), the process returns to the step 909.

As mentioned above, in accordance with the present invention, it becomes possible to automatically set the priority so that the lower the accounting condition is, the more highly the priority of connection is raised in the wireless terminal, based upon the accounting condition of which the wireless system informed, i.e. the priority P has a negative correlation as against the accounting condition.

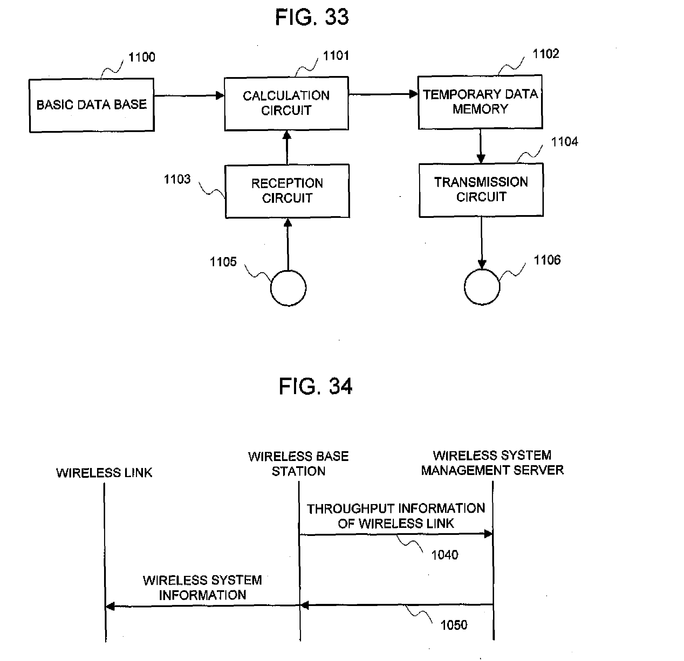

The above-mentioned wireless system information can be also notified directly to the wireless terminal from the network management server without generating it in the wireless system information broadcast means 86. In this case, the wireless system information broadcast means 86 within the wireless base station is not required, and the network management server is configured as shown in Fig. 33. In the figure, 1100 is a basic data base, 1101 is a calculation circuit, 1102 is a temporary data memory, 1103 is a reception circuit, 1104 is a transmission circuit, 1105 is an input terminal, and 1106 is an output terminal.

The basic data base 1100 keeps at least one parameter of the priority P of the connection to the wireless system from the wireless terminal, the threshold Q1 of the wireless link quality with which the connection to the wireless system should be initiated, the threshold Q2 of the wireless link quality with which the connection to the wireless system should be disconnected, the flag F1 for making the switchover as to whether or not the connection to the wireless system is made automatically, the flag F2 for making the switchover as to whether or not the connection to the wireless system is disconnected automatically, the flag F3 for making the setting as to whether or not a change in the connection status to the wireless system is notified to the user of the wireless terminal, the flag F4 for making the setting as to whether or not the user of the wireless terminal is prompted to input the authentication information at the time of the connection to the wireless system, and the accounting condition C per the unit time, or per the transmission/reception data quantity that is required for the wireless terminal's connection.

In the temporary data memory 1102 is retained a value shaped as the wireless system information by the calculation circuit 1101, based upon: the offer-enable throughput S obtained by taking into consideration both the offer-enable throughput in the interval ranging from the wireless base station to the wireless link that is input via the input terminal 1105 and the reception circuit 1103, and the offer-enable throughput of the wire network that the wireless system management server measured; and information of the basic data base 1100. The wireless system information stored in the temporary data memory 1102 is notified to the wireless terminal through the wireless base station via the transmission circuit 104 and the output terminal 1106, as shown in Fig. 34.

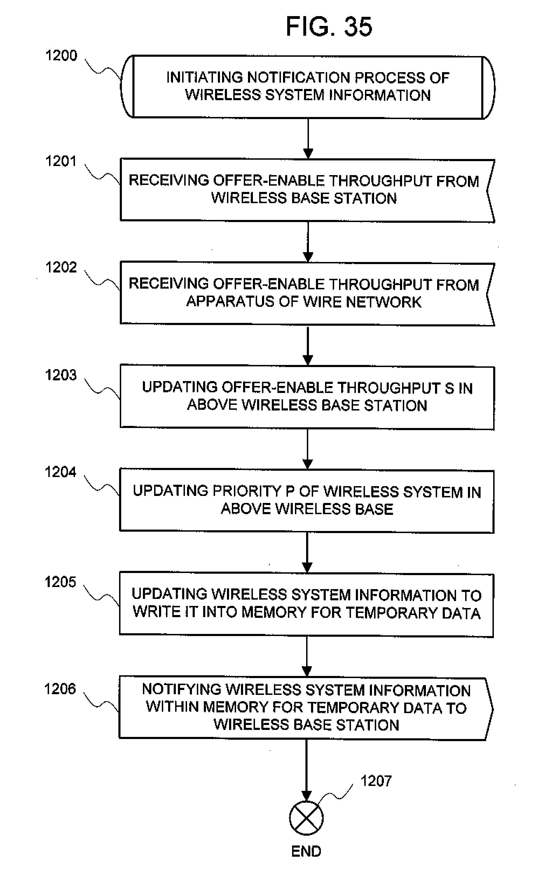

Also, in Fig. 35 is illustrated an operational flow of the network wireless-system management server at this moment. When the network management server received the ffer-enable throughput from the wireless base station and the apparatus of the wire network, it keeps its values steps 1201 and 1202). It decides the offer-enable hroughput S in the above wireless base station in consideration of these values (step 1203) to decide the value of the priority P of the wireless system to be broadcasted from the above wireless base station responding to the value of S, etc. (step 1204). Further, after it wrote the updated wireless system information into the temporary data memory (step 1205) to output the wireless system information to the wireless base station step 1206), it finishes the process (step 1207).

In each of the above-mentioned embodiments, as a communication system, the wireless system was exemplified for explanation; however as a rule, not only a plurality of the wireless systems, but also the system in which the wireless system and the wire system exist together, and the wire system are acceptable, and further, it is apparent that, as to the wireless communication system, not only the mobile communication system but also a communication system including the LAN system, etc. are acceptable.

Additionally, it is apparent that the operational flow of each part in each of the above-mentioned embodiments is possible to realize by pre-recording the procedure in conformity with this operational flow as a program in a record medium to cause a computer such as a CPU etc. to read it for execution.

As mentioned above, in accordance with the present invention, it becomes possible to stably realize the handover between the communication systems responding to the connection policy information such as the priority of the communication system and the advisability condition of the automatic connection to be set by the user, and the communication link quality between the wireless terminal and each communication system. Further, in accordance with the present invention, it becomes possible to impose restrictions on the number of the communication link that can be simultaneously established from the communication terminal to restrain the power consumption of the communication terminal, and to dynamically incorporate the operational situation of the network such as the congestion status for reflecting it in the conditioned determination of the handover.

## Claims

1. A communication terminal connectable to a plurality of communication systems, said communication terminal comprising communication system selection means for deciding the communication system to which to connect, based upon a communication link quality, and a connection policy set for each of said plurality of said communication systems.

2. The communication terminal according to claim 1, wherein said connection policy includes a priority of a connection; and
    said communication system selection means comprises means for making a connection to the communication system of which said communication link quality is equal to or more than a first threshold, and yet of which said priority is highest, with a change in the communication link quality.

3. The communication terminal according to claim 2, said communication terminal wherein said connection policy includes connection advisability information indicating advisability of a connection set for each of said plurality of said communication systems; and
    said communication system selection means comprises means for making a connection to the communication system of which said priority is highest, out of the communication systems of which said communication link quality is equal to or more than said first threshold, and yet of which said connection advisability information indicates pro, with a change in the communication link quality.

4. The communication terminal according to claim 3, said communication terminal comprises means for making a connection to the communication system of which said connection advisability information indicating con in response to a user's manual operation.

5. The communication terminal according to one of claim 2 to claim 4, said communication terminal comprises means for setting so that said first threshold and said priority for each of said communication systems have a negative correlation.

6. The communication terminal according to one of claim 2 to claim 5, said communication terminal **characterized in that** said communication system selection means, which has a maximum simultaneous-connection communication system number, is means for disconnecting a connection to the communication system of which said priority is lowest in a case where the communication system number in connection exceeded said maximum simultaneous-connection communication system number, with a change in the communication link quality.

7. The communication terminal according to one of claim 1 to claim 6, said communication terminal **characterized in that**:

   said connection policy includes a second threshold of the communication link quality set for each of a plurality of the communication systems, with which a connection should be terminated; and

   said communication system selection means is means for disconnecting a connection to the communication system of which said communication link quality amounted to less than said second threshold, with a change in the communication link quality.

8. The communication terminal according to claim 7, said communication terminal **characterized in that**:

   said connection policy includes disconnection advisability information indicating advisability of a disconnection set for each of said plurality of said communication systems; and

   said communication system selection means is means for disconnecting a connection to the communication system of which said priority is lowest, out of the communication systems of which said communication link quality is less than said second threshold, and yet of which said disconnection advisability information indicates pro, with a change in the communication link quality.

9. The communication terminal according to claim 8, said communication terminal comprising means for disconnecting a connection to the communication system of which said disconnection advisability information indicates con in response to a user's manual operation, or in response to deterioration in the above quality to the degree that the communication link is impossible to maintain.

10. The communication terminal according to one of claim 7 to claim 9, said communication terminal comprising means for setting so that said second threshold and said priority for each of said communication systems have a negative correlation.

11. The communication terminal according to one of claim 1 to claim 10, said communication terminal **characterized in:**

   **that** said connection policy includes notification advisability information indicating whether or not a change in the connection status is notified to a user; and

   including means for, in a case where said notification advisability information indicates pro, making a notification to the user in response to a connection/disconnection to/from the communication system by said communication system selection means for each of said plurality of said communication systems.

12. The communication terminal according to one of claim 1 to claim 11, said communication terminal **characterized in:**

   **that** said connection policy includes authentication advisability information indicating whether or not the user is prompted for inputting authentication information at the time of connection for each of said plurality of said communication systems; and

   including means for, in a case where said authentication advisability information indicates pro, prompting the user for inputting the authentication information at the time of initiating the connection by said communication system selection means to acquire and set a cryptography key for communication from the communication system in a case where the authentication succeeded.

13. The communication terminal according to one of claim 2 to claim 12, said communication terminal **characterized in:**

   **that** at least one of said priority, said first threshold, said second threshold, said connection advisability information, said disconnection advisability information, said notification advisability information, and said authentication advisability information is notified from said communication system side; and

including means for receiving and setting this.

14. The communication terminal according to one of claim 1 to claim 13, said communication terminal **characterized in** including means for receiving a notification of offer-enable throughput based upon a congestion status of a wireless interface and a wire network from each of said plurality of said communication systems to set said priority so that said priority has a positive correlation as against said throughput.

15. The communication terminal according to one of claim 1 to claim 14, said communication terminal comprising means for receiving a notification of accounting information from each of said plurality of said communication systems to set said priority so that said priority has a negative correlation as against said accounting information.

16. The communication terminal according to one of claim 1 to claim 15, wherein said communication terminal is at least one of a wireless communication system and a wire communication system.

17. A base station for making communication with a communication terminal connectable to a plurality of communication systems, and yet adapted to select the communication system to which a connection should be initiated according to a communication link quality and a connection policy, said base station comprising means for informing said communication terminal of said connection policy.

18. The base station according to claim 17, said base station **characterized in that** said connection policy is at least one of a connection priority, a communication link quality threshold with which a connection should be initiated, connection advisability information indicating advisability of a connection, a threshold of the communication link quality with which a connection should be terminated, disconnection advisability information indicating advisability of a disconnection, notification advisability information indicating whether or not a change in a connection status is notified to a user, and authentication advisability information indicating whether or not the user is prompted for inputting authentication information at the time of connection.

19. The base station according to one of claim 17 and claim 18, said base station comprising the means for:
    observing a congestion status of a wireless interface and a wire network; and
    informing said communication terminal of offer-enable throughput based upon this observation data.

20. The base station according to one of claim 17 and claim 19, said base station **characterized in** including means for informing about an accounting condition for said communication terminal's connection that is required of this terminal.

21. A network management server for making communication with a communication terminal connectable to a plurality of communication systems, and yet adapted to select the communication system to which a connection should be initiated according to a communication link quality and a connection policy, said server **characterized in** including means for informing said communication terminal of said connection policy.

22. The server according to claim 21, wherein said connection policy is at least one of a connection priority, a communication link quality threshold with which a connection should be initiated, connection advisability information indicating advisability of a connection, a threshold of the communication link quality with which a connection should be terminated, disconnection advisability information indicating advisability of a disconnection, notification advisability information indicating whether or not a change in a connection status is notified to a user, and authentication advisability information indicating whether or not the user is prompted for inputting authentication information at the time of connection.

23. The server according to one of claim 21 and claim 22, said server comprising:
    reception means for receiving a congestion situation of a wireless interface;
    means for observing a congestion status of a wire network; and
    means for informing said communication terminal of offer-enable throughput based upon this observation data, and data received by said reception means.

24. The server according to one of claim 21 to claim 23, said server comprising means for informing about an accounting condition for said communication terminal's connection that is required of this terminal.

25. A handover method, between communication systems, of a communication terminal connectable to a plurality of communication systems, said handover method comprising a communication system selection step of, in said communication terminal, deciding the communication system to which to connect, based upon a communication link quality, and a connection policy set for each of said plurality of said communication systems.

26. The handover method according to claim 25, said handover method **characterized in that**:

said connection policy includes a priority of a connection; and

said communication system selection step is a step of making a connection to the communication system, of which said communication link quality is equal to or more than a first threshold, and yet of which said priority is highest, with a change in the communication link quality.

27. The handover method according to claim 26, said handover method **characterized in that**:

said connection policy includes connection advisability information indicating advisability of a connection set for each of said plurality of said communication systems; and

said communication system selection step is a step of making a connection to the communication system of which said priority is highest, out of the communication systems, of which said communication link quality is equal to or more than said first threshold, and yet of which said connection advisability information indicates pro, with a change in the communication link quality.

28. The handover method according to claim 27, said handover method comprising a step of making a connection to the communication system of which said connection advisability information indicating con in response to a user's manual operation.

29. The handover method according to one of claim 25 to claim 28, said handover method comprising a step of setting so that said first threshold and said priority for each of said communication systems have a negative correlation.

30. The handover method according to one of claim 25 to claim 29, said handover method **characterized in**:

having a maximum simultaneous-connection communication system number provided; and

**that** said communication system selection step is a step of disconnecting a connection to the communication system of which said priority is lowest in a case where the number of the communication systems in connection exceeded said maximum simultaneous-connection communication system number, with a change in the communication link quality.

31. The handover method according to one of claim 25 to claim 30, said handover method **characterized in that**:

said connection policy includes a second threshold of the communication link quality set for each of said plurality of said communication systems, with which a connection should be terminated; and

said communication system selection step is a step of disconnecting a connection to the communication system of which said communication link quality amounted to less than said second threshold, with a change in the communication link quality.

32. The handover method according to claim 31, said handover method **characterized in that**:

said connection policy includes disconnection advisability information indicating advisability of a disconnection set for each of said plurality of said communication systems; and

said communication system selection step is a step of disconnecting a connection to the communication system of which said priority is lowest, out of the communication systems of which said communication link quality is less than said second threshold, and yet of which said disconnection advisability information indicates pro, with a change in the communication link quality.

33. The handover method according to claim 32, said handover method comprising a step of disconnecting a connection to the communication system of which said disconnection advisability information indicates con in response to a user's manual operation, or in response to deterioration in the above quality to the degree that the communication link is impossible to maintain.

34. The handover method according to one of claim 31 to claim 33, said handover method comprising a step of setting so that said second threshold and said priority for each of said communication systems have a negative correlation.

35. The handover method according to one of claim 25 to claim 34, said handover method **characterized in:**

**that** said connection policy includes notification advisability information indicating whether or not a change in the connection status is notified to a user for each of said plurality of said communication systems; and

including a step of, in a case where said notification advisability information indicates pro, making a notification to the user in response to a connection/ disconnection to/from the communication system by said communication system selection step.

36. The handover method according to one of claim 25 to claim 35, said handover method **characterized in:**

**that** said connection policy includes authentication advisability information indicating whether or not the user is prompted for inputting authentication information at the time of connection for each of said plurality of said communication systems; and

including a step of, in a case where said authentication advisability information indicates pro, prompting the user for inputting the authentication information at the time of initiating a connection by said communication system selection step to acquire and set a cryptography key for communication from the communication system in a case where the authentication succeeded.

37. The handover method according to one of claim 26 to claim 36, said handover method comprising the steps of:

notifying at least one of said priority, said first threshold, said second threshold, said connection advisability information, said disconnection advisability information, said notification advisability information, and said authentication advisability information from said communication system side; and

receiving and setting this on said communication terminal side.

38. The handover method according to one of claim 25 to claim 37, said handover method comprising the steps of:

making a notification of offer-enable throughput based upon a congestion status of a wireless interface and a wire network from each of said plurality of said communication systems; and

setting said priority on said communication terminal side so that said priority has a positive correlation as against said throughput.

39. The handover method according to one of claim 25 to claim 38, said handover method comprising the steps of:

making a notification of accounting information from each of said plurality of said communication systems;

receiving this accounting information on said communication terminal side; and

setting said priority so that said priority has a negative correlation as against said accounting information.

40. The handover method according to one of claim 25 to claim 39, wherein said communication system is at least one of a wireless communication system and a wire communication system.

41. A network system having a function that a communication terminal connectable to a plurality of communication systems makes a handover between communication systems, said network system **characterized in that** said communication terminal includes means for deciding the communication system to which to connect according to a communication link quality and a connection policy.

42. The network system according to claim 41, wherein said network system comprising means for informing said communication terminal of said connection policy.

43. The network system according to one of claim 41 and claim 42, said network system **characterized in that** said connection policy is at least one of a connection priority, a communication link quality threshold with which a connection should be initiated, connection advisability information indicating advisability of a connection, a threshold of the communication link quality with which a connection should be terminated, disconnection advisability information indicating advisability of a disconnection, notification advisability information indicating whether or not a change in a connection status is notified to a user, and authentication advisability information indicating whether or not the user is prompted for inputting authentication information at the time of connection.

44. The network system according to one of claim 41 to claim 43, said network system **characterized in** including the means for:

observing a congestion status of a wireless interface and a wire network; and

informing said communication terminal of offer-enable throughput based upon this observation data.

45. The network system according to one of claim 41 to claim 44, said network system **characterized in** including means for informing about an accounting condition for said communication terminal's connection that is required of this terminal.

46. A computer-readable program for controlling an operation of a communication terminal connectable to a plurality of communication systems, said program **characterized in** including a communication system selection step of deciding the communication system to which to connect based upon a communication link quality and a connection policy set for each of said plurality of said communication systems.

47. A computer-readable program for controlling an operation of a base station that makes communication with a communication terminal connectable to a plurality of communication systems and yet adapted to decided the communication system to which to connect based upon a communication link quality and a connection policy, said program **characterized in** including a step of informing said communication terminal of said connection policy.

48. A computer-readable program for controlling an operation of a network management server that makes communication with a communication terminal connectable to a plurality of communication systems and yet adapted to decided the communication system to which to connect based upon a communication link quality and a connection policy, said program **characterized in** including a step of informing said communication terminal of said connection policy.

# FIG. 1

WIRE NETWORK A — 30

WIRE NETWORK B — 31

WIRE NETWORK C — 32

NETWORK MANAGEMENT SERVER A — 40

NETWORK MANAGEMENT SERVER B — 41

EXTERNAL NETWORK — 50

NETWORK MANAGEMENT SERVER C — 42

310 320 321 311 322 312 300 301 302 303 304

SERVICE AREA OF WIRELESS SYSTEM A 100

SERVICE AREA OF WIRELESS SYSTEM B 101

SERVICE AREA OF WIRELESS SYSTEM C 102

WIRELESS BASE STATION — 20

WIRELESS BASE STATION — 21

WIRELESS BASE STATION — 22

WIRELESS BASE STATION — 23

WIRELESS BASE STATION — 24

200 201 202 203 204 205 206 207

10 11 12 13 14 15 16 17

EP 1 465 451 A2

# FIG. 2

10

| APPLICATION EXECUTION MEANS | 70 |
|---|---|

415

414 · 69

| TCP/IP PROCESS MEANS |
|---|

411

| WIRELESS SYSTEM REGISTRATION MEANS | 66 · 412 |
|---|---|

| CONNECTION STATUS DISPLAY MEANS | 67 |
|---|---|

409

62 · 406

| WIRELESS SYSTEM INFORMATION ACQUISITION CIRCUIT |
|---|

| HANDOVER DETERMINATION MEANS | 65 |
|---|---|

410

407 · 408 · 413

63

| WIRELESS LINK QUALITY ACQUISITION CIRCUIT |
|---|

| WIRELESS SYSTEM CONNECTION/ DISCONNECTION MEANS | 64 |
|---|---|

| MANUAL CONNECTION/ DISCONNECTION MEANS | 68 |
|---|---|

402

401

403

400

405

404

| WIRELESS RECEIVER |
|---|

60

| WIRELESS TRANSMITTER |
|---|

61

200

200

EP 1 465 451 A2

# FIG. 3

APPLICATION EXECUTION MEANS — 70

TCP/IP PROCESS MEANS — 69

APPLICATION SELECTION MEANS — 78

WIRELESS SYSTEM REGISTRATION MEANS — 66

CONNECTION STATUS DISPLAY MEANS — 67

WIRELESS SYSTEM INFORMATION ACQUISITION CIRCUIT — 62

HANDOVER DETERMINATION MEANS — 65

WIRELESS LINK QUALITY ACQUISITION CIRCUIT — 63

WIRELESS SYSTEM CONNECTION/ DISCONNECTION MEANS — 64

MANUAL CONNECTION/ DISCONNECTION MEANS — 68

WIRELESS RECEIVER — 60

WIRELESS TRANSMITTER — 61

23

FIG. 4

20

| 87 | NETWORK MANAGEMENT SERVER COMMUNICATION MEANS |
|---|---|

457

| 85 | STATISTIC INFORMATION ACQUISITION MEANS | 458 | WIRELESS SYSTEM INFORMATION BROADCAST MEANS |
|---|---|---|---|

86

455          459          456          454

| 84 | DATA TRANSFER MEANS |
|---|---|

450          451          452          453

| 80 | WIRELESS RECEIVER | 81 | WIRELESS TRANSMITTER | 82 | WIRE RECEIVER | 83 | WIRE TRANSMITTER |
|---|---|---|---|---|---|---|---|

200, 201          200, 201          300          300

# FIG. 5

950

| DESTINATION WIRELESS-TERMINAL IDENTIFIER = BROADCAST |
| :-- |
| 960 |
| TRANSMISSION SOURCE BASE STATION IDENTIFIER |
| 961 |
| PACKET CLASSIFICATION = WIRELESS SYSTEM INFORMATION |
| 962 |
| WIRELESS SYSTEM IDENTIFIER (N) |
| 963 |

# FIG. 6

500

| WIRELESS INTERFACE 510 | SYSTEM IDENTIFIER (N) 520 | PRIORITY (P) OF CONNECTION 530 | CONNECTION INITIATION WIRELESS-LINK QUALITY THRESHOLD (Q1) 540 |
|---|---|---|---|
| WLAN 511 | OFFICE 1 521 | 7 531 | 5 dB 541 |
| WLAN 512 | LOUNGE 1 522 | 4 532 | 8 dB 542 |
| WLAN 513 | LOUNGE 2 523 | 2 533 | 15 dB 543 |
| WLAN 514 | PUBLIC 1 524 | 1 534 | 15 dB 544 |
| Cellular 515 | PUBLIC 2 525 | 0 535 | N/A 535 |

## FIG. 7

800 — INITIATING REGISTRATION/UPDATE PROCESS OF WIRELESS SYSTEM INFORMATION

↓

801 — INPUTTING WIRELESS SYSTEM INFORMATION INTO WIRELESS SYSTEM REGISTRATION MEANS BY USER

↓

802 — SETTING WIRELESS INTERFACE INFORMATION AND WIRELESS SYSTEM IDENTIFIER N

↓

803 — DESIGNATION FOR PRIORITY P OF CONNECTION BY USER EXISTS?

— NO → 805 — SETTING P = CONNECTION PRIORITY OF DEFAULT

YES ↓

804 — SETTING P = PRIORITY DESIGNATED BY USER

↓

806 — DESIGNATION FOR CONNECTION INITIATION WIRELESS-LINK QUALITY THRESHOLD (Q1) BY USER EXISTS?

— NO → 808 — SETTING Q1 = CONNECTION INITIATION WIRELESS-LINK QUALITY THRESHOLD OF DEFAULT

YES ↓

807 — SETTING Q1 = CONNECTION INITIATION WIRELESS-LINK QUALITY THRESHOLD DESIGNATED BY USER

↓

809 — OUTPUTTING REGISTERED/UPDATED INFORMATION OF WIRELESS SYSTEM TO HANDOVER DETERMINATION MEANS

↓

810 — GIVING INSTRUCTION FOR DISPLAY UPDATE TO CONNECTION STATUS DISPLAY MEANS

↓

811 — END

27

# FIG. 8

```
                    ╭─────────────────────────────────╮  600
                    │   INITIATING HANDOVER PROCESS   │
                    ╰─────────────────────────────────╯
                                   │
                                   ▼
                    ┌─────────────────────────────────┐  601
                    │     OCCURRENCE OF HANDOVER       │
                    │      DETERMINATION TIMING        │
                    └─────────────────────────────────┘
                                   │
                                   ▼
                    ┌─────────────────────────────────┐  602
                    │ ACQUIRING WIRELESS SYSTEM        │
                    │ REGISTRATION INFORMATION FROM    │
                    │ WIRELESS SYSTEM REGISTRATION     │
                    │ MEANS                            │
                    └─────────────────────────────────┘
                                   │
                                   ▼
                    ┌─────────────────────────────────┐  603
                    │ ACQUIRING IDENTIFIER LIST OF     │
                    │ CONNECTABLE WIRELESS SYSTEMS     │
                    │ FROM WIRELESS SYSTEM INFORMATION │
                    │ ACQUISITION CIRCUIT              │
                    └─────────────────────────────────┘
                                   │
                                   ▼
                    ┌─────────────────────────────────┐  604
                    │ ACQUIRING WIRELESS LINK QUALITY  │
                    │ AS AGAINST CONNECTABLE WIRELESS  │
                    │ SYSTEMS FROM WIRELESS LINK       │
                    │ QUALITY ACQUISITION CIRCUIT      │
                    └─────────────────────────────────┘
```

606 SCHEDULING NEXT HANDOVER DETERMINATION TIMING

605 NO WIRELESS SYSTEM EXISTS — SELECTING CONNECTION DESTINATION CANDIDATE FROM WIRELESS SYSTEMS IN ORDER OF HIGH PRIORITY

WIRELESS SYSTEM EXISTS

607 AUTOMATIC CONNECTION PROCESS OF WIRELESS SYSTEMS

# FIG. 9

610 — INITIATING AUTOMATIC CONNECTION PROCESS OF WIRELESS SYSTEMS

611 — SELECTING BASE STATION OF WHICH WIRELESS LINK QUALITY BETWEEN IT AND WIRELESS TERMINAL IS MOST EXCELLENT, OUT OF BASE STATIONS THAT BELONG TO SELECTED WIRELESS SYSTEM

612 — BASE STATION ALREADY IN CONNECTION? — YES → 613 END

NO

614 — Q = WIRELESS LINK QUALITY BETWEEN BASE STATION THAT IS CONNECTION DESTINATION CANDIDATE, AND WIRELESS TERMINAL

615 — Q1 = CONNECTION INITIATION WIRELESS-LINK QUALITY THRESHOLD ALREADY REGISTERED TO WIRELESS SYSTEM THAT IS CONNECTION DESTINATION CANDIDATE

616 — $Q \geqq Q1?$ — NO → 617 END

YES

618 — CONNECTION TO SELECTED BASE STATION

619 — CONNECTION SUCCEEDED? — NO → 620 END

YES

621 — IN CASE WHERE WIRELESS SYSTEMS IN CONNECTION EXIST IN PLURAL, WIRELESS SYSTEM TO WHICH CONNECTION WAS NEWLY MADE HAS HIGHEST PRIORITY? — NO

YES

622 — UPDATING DEFAULT ROUTE FOR WIRELESS SYSTEM TO WHICH CONNECTION WAS NEWLY MADE

623 — GIVING INSTRUCTION FOR DISPLAY UPDATE TO CONNECTION STATUS DISPLAY MEANS

624 END

# FIG. 10

630 — INITIATING MANUAL CONNECTION PROCESS OF WIRELESS SYSTEMS

↓

631 — INPUTTING INSTRUCTION FOR CONNECTION TO NEW WIRELESS SYSTEM BY MANUAL CONNECTION/DISCONNECTION MEANS

↓

632 — SELECTING BASE STATION OF WHICH WIRELESS LINK QUALITY BETWEEN IT AND WIRELESS TERMINAL IS MOST EXCELLENT, OUT OF BASE STATIONS THAT BELONG TO SELECTED WIRELESS SYSTEM

↓

633 — CONNECTION TO SELECTED BASE STATION

↓

634 — CONNECTION SUCCEEDED? —NO→ 635 ⊗ END

YES ↓

636 — IN CASE WHERE WIRELESS SYSTEMS IN CONNECTION EXIST IN PLURAL, WIRELESS SYSTEM TO WHICH CONNECTION WAS NEWLY MADE HAS HIGHEST PRIORITY? —NO→

YES ↓

637 — UPDATING DEFAULT ROUTE FOR WIRELESS SYSTEM TO WHICH CONNECTION WAS NEWLY MADE

↓

638 — GIVING INSTRUCTION FOR DISPLAY UPDATE TO CONNECTION STATUS DISPLAY MEANS

↓

639 ⊗ END

# FIG. 11

640 — INITIATING MANUAL DISCONNECTION PROCESS OF WIRELESS SYSTEMS

641 — INPUTTING INSTRUCTION FOR DISCONNECTION FROM WIRELESS SYSTEM BY MANUAL CONNECTION/DISCONNECTION MEANS

642 — CONNECTION TO BASE STATION OF SELECTED WIRELESS SYSTEM IS UNDER WAY?

NO → 643 ⊗ END

YES

644 — DISCONNECTION FROM BASE STATION IN CONNECTION

645 — DISCONNECTION SUCCEEDED?

NO → 646 ⊗ END

YES

647 — WIRELESS SYSTEM TO WHICH CONNECTION WAS DISCONNECTED HAS DEFAULT ROUTE SET?

NO →

YES

648 — UPDATING DEFAULT ROUTE FOR WIRELESS SYSTEM IN CONNECTION HAVING NEXT HIGHEST PRIORITY

649 — GIVING INSTRUCTION FOR DISPLAY UPDATE TO CONNECTION STATUS DISPLAY MEANS

650 ⊗ END

# FIG. 12

501

| WIRELESS INTERFACE 510 | SYSTEM IDENTIFIER (N) 520 | PRIORITY (P) OF CONNECTION 530 | CONNECTION INITIATION WIRELESS-LINK QUALITY THRESHOLD (Q1) 540 | AUTOMATIC CONNECTION FLAG (F1) 550 |
|---|---|---|---|---|
| WLAN 511 | OFFICE 1 521 | 7 531 | 5 dB 541 | ON 551 |
| WLAN 512 | LOUNGE 1 522 | 4 532 | 8 dB 542 | ON 552 |
| WLAN 513 | LOUNGE 2 523 | 2 533 | 15 dB 543 | ON 553 |
| WLAN 514 | PUBLIC 1 524 | 1 534 | 15 dB 544 | ON 554 |
| Cellular 515 | PUBLIC 2 525 | 1 535 | N/A 535 | OFF 555 |

## FIG. 13

660 — INITIATING AUTOMATIC CONNECTION PROCESS OF WIRELESS SYSTEMS

661 — AUTOMATIC CONNECTION FLAG OF SELECTED WIRELESS SYSTEM F1 = ON? — NO → 662 ⊗ END

↓ YES

663 — SELECTING BASE STATION OF WHICH WIRELESS LINK QUALITY BETWEEN IT AND WIRELESS TERMINAL IS MOST EXCELLENT, OUT OF BASE STATIONS THAT BELONG TO SELECTED WIRELESS SYSTEM

664 — BASE STATION ALREADY IN CONNECTION? — YES → 665 ⊗ END

↓ NO

666 — Q = WIRELESS LINK QUALITY BETWEEN BASE STATION THAT IS CONNECTION DESTINATION CANDIDATE, AND WIRELESS TERMINAL

667 — Q1 = CONNECTION INITIATION WIRELESS-LINK QUALITY THRESHOLD ALREADY REGISTERED TO WIRELESS SYSTEM THAT IS CONNECTION DESTINATION CANDIDATE

668 — $Q \geqq Q1$? — NO → 669 ⊗ END

↓ YES

670 — CONNECTION TO SELECTED BASE STATION

671 — CONNECTION SUCCEEDED? — NO → 872 ⊗ END

↓ YES

673 — IN CASE WHERE WIRELESS SYSTEMS IN CONNECTION EXIST IN PLURAL, WIRELESS SYSTEM TO WHICH CONNECTION WAS NEWLY MADES HAS HIGHEST PRIORITY? — NO

↓ YES

674 — UPDATING DEFAULT ROUTE FOR WIRELESS SYSTEM TO WHICH CONNECTION WAS NEWLY MADE

675 — GIVING INSTRUCTION FOR DISPLAY UPDATE TO CONNECTION STATUS DISPLAY MEANS

⊗ END — 676

## FIG. 14

820 — INITIATING REGISTRATION/UPDATE PROCESS OF WIRELESS SYSTEM INFORMATION

821 — INPUTTING WIRELESS SYSTEM INFORMATION INTO WIRELESS SYSTEM REGISTRATION MEANS BY USER

822 — SETTING WIRELESS INTERFACE INFORMATION AND WIRELESS SYSTEM IDENTIFIER N

823 — DESIGNATION FOR PRIORITY P OF CONNECTION BY USER EXISTS?

NO

YES

824 — SETTING P = PRIORITY DESIGNATED BY USER

825 — SETTING P = CONNECTION PRIORITY OF DEFAULT

826 — Pmax = MAXIMUM VALUE OF CONNECTION PRIORITY

827 — DESIGNATION FOR CONNECTION INITIATION WIRELESS-LINK QUALITY THRESHOLD (Q1) BY USER EXISTS?

NO

YES

829 — $\Delta Q1$ = CONNECTION INITIATION THRESHOLD DIFFERENCE

828 — SETTING Q1 = CONNECTION INITIATION WIRELESS-LINK QUALITY THRESHOLD DESIGNATED BY USER

830 — SETTING Q1 = (CONNECTION INITIATION WIRELESS-LINK QUALITY THRESHOLD OF DEFAULT) + (Pmax - P) $\cdot \Delta Q1$

831 — OUTPUTTING REGISTERED/UPDATED INFORMATION OF WIRELESS SYSTEM TO HANDOVER DETERMINATION MEANS

832 — GIVING INSTRUCTION FOR DISPLAY UPDATE TO CONNECTION STATUS DISPLAY MEANS

833 — END

# FIG. 15

```
                         ┌─────────────────────────────┐
                         │  INITIATING HANDOVER PROCESS │   680
                         └─────────────────────────────┘
                                      │
                                      ▼
                         ┌─────────────────────────────┐
                         │   OCCURRENCE OF HANDOVER     │   681
                         │     DETERMINATION TIMING     │
                         └─────────────────────────────┘
                                      │
                                      ▼
   687                   ┌─────────────────────────────┐   682
┌──────────────────┐     │ ACQUIRING WIRELESS SYSTEM    │
│  SCHEDULING NEXT │     │ REGISTRATION INFORMATION     │
│     HANDOVER     │     │ FROM WIRELESS SYSTEM         │
│  DETERMINATION   │     │    REGISTRATION MEANS        │
│      TIMING      │     └─────────────────────────────┘
└──────────────────┘                  │
          ▲                           ▼
          │                686 ┌─────────────────────────────┐   683
┌──────────────────┐     │ ACQUIRING IDENTIFIER LIST OF │
│    AUTOMATIC     │     │ CONNECTABLE WIRELESS SYSTEMS │
│  DISCONNECTION   │     │ FROM WIRELESS SYSTEM         │
│   PROCESS OF     │     │ INFORMATION ACQUISITION CIRCUIT│
│ WIRELESS SYSTEMS │     └─────────────────────────────┘
└──────────────────┘                  │
          ▲                           ▼
          │                ┌─────────────────────────────┐   684
          │                │ ACQUIRING WIRELESS LINK      │
          │                │ QUALITY AS AGAINST           │
          │                │ CONNECTABLE WIRELESS SYSTEMS │
          │                │ FROM WIRELESS LINK QUALITY   │
          │                │ ACQUISITION CIRCUIT          │
          │                └─────────────────────────────┘
    NO WIRELESS                       │
   SYSTEM EXISTS                      ▼
          │         ┌──────────────────────────────────┐
          └─────────┤  SELECTING CONNECTION DESTINATION │
                    │  CANDIDATE FROM WIRELESS SYSTEMS  │
                    │     IN ORDER OF HIGH PRIORITY     │
                685 └──────────────────────────────────┘
                                      │
                          WIRELESS SYSTEM EXISTS
                                      ▼
                    ┌─────────────────────────────┐
            688     │ AUTOMATIC CONNECTION PROCESS │
                    │    OF WIRELESS SYSTEMS       │
                    └─────────────────────────────┘
```

# FIG. 16

```
                    ┌─────────────────────────────────┐
                    │ INITIATING AUTOMATIC DISCONNECTION │  689
                    │   PROCESS OF WIRELESS SYSTEMS      │
                    └─────────────────────────────────┘
                                   │
                    ┌─────────────────────────────────┐
                    │ M= MAXIMUM SIMULTANEOUS-CONNECTION │  690
                    │      WIRELESS-SYSTEM NUMBER        │
                    └─────────────────────────────────┘
```

- 689 INITIATING AUTOMATIC DISCONNECTION PROCESS OF WIRELESS SYSTEMS
- 690 M= MAXIMUM SIMULTANEOUS-CONNECTION WIRELESS-SYSTEM NUMBER
- 691 NUMBER OF CURRENT WIRELESS SYSTEM IN CONNECTION > M?  — NO
  - YES
- 692 SELECTING DISCONNECTION DESTINATION CANDIDATE FROM WIRELESS SYSTEMS IN ORDER OF LOW PRIORITY — NO WIRELESS SYSTEM EXISTS
  - WIRELESS SYSTEM EXISTS
- 693 END
- 694 CONNECTION TO BASE STATION OF SELECTED WIRELESS SYSTEM IS UNDER WAY? — NO
  - YES
- 695 DISCONNECTION FROM BASE STATION IN CONNECTION
- 696 DISCONNECTION SUCCEEDED? — NO
  - YES
- 697 WIRELESS SYSTEM TO WHICH CONNECTION WAS DISCONNECTED HAS DEFAULT ROUTE SET? — NO
  - YES
- 698 UPDATING DEFAULT ROUTE FOR WIRELESS SYSTEM IN CONNECTION HAVING NEXT HIGHEST PRIORITY
- 699 GIVING INSTRUCTION FOR DISPLAY UPDATE TO CONNECTION STATUS DISPLAY MEANS

FIG. 17

502

| WIRELESS INTERFACE 510 | SYSTEM IDENTIFIER (N) 520 | PRIORITY (P) OF CONNECTION 530 | CONNECTION INITIATION WIRELESS-LINK QUALITY THRESHOLD (Q1) 540 | AUTOMATIC CONNECTION FLAG (F1) 550 | CONNECTION TERMINATION WIRELESS-LINK QUALITY THRESHOLD (Q2) 560 |
|---|---|---|---|---|---|
| WLAN 511 | OFFICE 1 521 | 7 531 | 5 dB 541 | ON 551 | 0 dB 561 |
| WLAN 512 | LOUNGE 1 522 | 4 532 | 8 dB 542 | ON 552 | 0 dB 562 |
| WLAN 513 | LOUNGE 2 523 | 2 533 | 15 dB 543 | ON 553 | 3 dB 563 |
| WLAN 514 | PUBLIC 1 524 | 1 534 | 15 dB 544 | ON 554 | 5 dB 564 |
| Cellular 515 | PUBLIC 2 525 | 1 535 | N/A 535 | OFF 555 | N/A 565 |

EP 1 465 451 A2

# FIG. 18

INITIATING AUTOMATIC DISCONNECTION PROCESS OF WIRELESS SYSTEMS — 700

SELECTING DISCONNECTION DESTINATION CANDIDATE FROM WIRELESS SYSTEMS IN ORDER OF LOW PRIORITY — 701

NO WIRELESS SYSTEM EXISTS → ⊗ END — 702

WIRELESS SYSTEM EXISTS

CONNECTION TO BASE STATION OF SELECTED WIRELESS SYSTEM IS UNDER WAY? — 703 → NO

YES

Q = WIRELESS LINK QUALITY BETWEEN BASE STATION THAT IS DISCONNECTION DESTINATION CANDIDATE, AND WIRELESS TERMINAL — 704

Q2 = CONNECTION TERMINATION WIRELESS-LINK QUALITY THRESHOLD ALREADY REGISTERED TO WIRELESS SYSTEM THAT IS DISCONNECTION DESTINATION CANDIDATE — 705

Q < Q2? — 706 → NO

YES

DISCONNECTION FROM BASE STATION IN CONNECTION — 707

DISCONNECTION SUCCEEDED? — 708 → NO

YES

WIRELESS SYSTEM TO WHICH CONNECTION WAS DISCONNECTED HAS DEFAULT ROUTE SET? — 709 → NO

YES

UPDATING DEFAULT ROUTE FOR WIRELESS SYSTEM IN CONNECTION HAVING NEXT HIGHEST PRIORITY — 710

GIVING INSTRUCTION FOR DISPLAY UPDATE TO CONNECTION STATUS DISPLAY MEANS — 711

FIG. 19

503

| WIRELESS INTERFACE 510 | SYSTEM IDENTIFIER (N) 520 | PRIORITY (P) OF CONNECTION 530 | CONNECTION INITIATION WIRELESS-LINK QUALITY THRESHOLD (Q1) 540 | AUTOMATIC CONNECTION FLAG (F1) 550 | CONNECTION TERMINATION WIRELESS-LINK QUALITY THRESHOLD (Q2) 560 | AUTOMATIC DISCONNECTION FLAG (F2) 570 |
|---|---|---|---|---|---|---|
| WLAN 511 | OFFICE 1 521 | 7 531 | 5 dB 541 | ON 551 | 0 dB 561 | ON 571 |
| WLAN 512 | LOUNGE 1 522 | 4 532 | 8 dB 542 | ON 552 | 0 dB 562 | ON 572 |
| WLAN 513 | LOUNGE 2 523 | 2 533 | 15 dB 543 | ON 553 | 3 dB 563 | ON 573 |
| WLAN 514 | PUBLIC 1 524 | 1 534 | 15 dB 544 | ON 554 | 5 dB 564 | ON 574 |
| Cellular 515 | PUBLIC 2 525 | 1 535 | N/A 535 | OFF 555 | N/A 565 | OFF 575 |

EP 1 465 451 A2

EP 1 465 451 A2

# FIG. 20

INITIATING AUTOMATIC DISCONNECTION PROCESS OF WIRELESS SYSTEMS — 710

SELECTING DISCONNECTION DESTINATION CANDIDATE FROM WIRELESS SYSTEMS IN ORDER OF LOW PRIORITY — 711

NO WIRELESS SYSTEM EXISTS → END — 712

WIRELESS SYSTEM EXISTS

NO ← AUTOMATIC DISCONNECTION FLAG OF SELECTED WIRELESS SYSTEM F2 = ON? — 713

YES

NO ← CONNECTION TO BASE STATION OF SELECTED WIRELESS SYSTEM IS UNDER WAY? — 714

YES

Q= WIRELESS LINK QUALITY BETWEEN BASE STATION THAT IS DISCONNECTION DESTINATION CANDIDATE, AND WIRELESS TERMINAL — 715

Q2 = CONNECTION TERMINATION WIRELESS-LINK QUALITY THRESHOLD ALREADY REGISTERED TO WIRELESS SYSTEM THAT IS DISCONNECTION DESTINATION CANDIDATE — 716

NO ← $Q < Q2$? — 717

YES

DISCONNECTION FROM BASE STATION IN CONNECTION — 718

NO ← DISCONNECTION SUCCEEDED? — 719

YES

WIRELESS SYSTEM TO WHICH CONNECTION WAS DISCONNECTED HAS DEFAULT ROUTE SET? — 720 → NO

YES

UPDATING DEFAULT ROUTE FOR WIRELESS SYSTEM IN CONNECTION HAVING NEXT HIGHEST PRIORITY — 721

GIVING INSTRUCTION FOR DISPLAY UPDATE TO CONNECTION STATUS DISPLAY MEANS — 722

## FIG. 21

**840** INITIATING REGISTRATION/UPDATE PROCESS OF WIRELESS SYSTEM INFORMATION

**841** INPUTTING WIRELESS SYSTEM INFORMATION INTO WIRELESS SYSTEM REGISTRATION MEANS BY USER

**842** SETTING WIRELESS INTERFACE INFORMATION AND WIRELESS SYSTEM IDENTIFIER N

**843** DESIGNATION FOR PRIORITY P OF CONNECTION BY USER EXISTS? — NO

**845** SETTING P = CONNECTION PRIORITY OF DEFAULT

**844** YES — SETTING P = PRIORITY DESIGNATED BY USER

**846** $P_{max}$ = MAXIMUM VALUE OF CONNECTION PRIORITY

**847** DESIGNATION FOR CONNECTION INITIATION WIRELESS-LINK QUALITY THRESHOLD (Q1) BY USER EXISTS? — NO

**849** $\Delta Q1$ = CONNECTION INITIATION THRESHOLD DIFFERENCE

**848** YES — SETTING Q1 = CONNECTION INITIATION WIRELESS-LINK QUALITY THRESHOLD DESIGNATED BY USER

**850** SETTING Q1 = (CONNECTION INITIATION WIRELESS-LINK QUALITY THRESHOLD OF DEFAULT) + $(P_{max} - P) \cdot \Delta Q1$

**851** DESIGNATION FOR CONNECTION TERMINATION WIRELESS-LINK QUALITY THRESHOLD (Q2) BY USER EXISTS? — NO

**853** $\Delta Q2$ = CONNECTION TERMINATION THRESHOLD DIFFERENCE

**852** YES — SETTING Q2 = CONNECTION TERMINATION WIRELESS-LINK QUALITY THRESHOLD DESIGNATED BY USER

**854** SETTING Q2 = (CONNECTION TERMINATION WIRELESS-LINK QUALITY THRESHOLD OF DEFAULT) + $(P_{max} - P) \cdot \Delta Q2$

**855** OUTPUTTING REGISTERED/UPDATED INFORMATION OF WIRELESS SYSTEM TO HANDOVER DETERMINATION MEANS

**856** GIVING INSTRUCTION FOR DISPLAY UPDATE TO CONNECTION STATUS DISPLAY MEANS

**857** END

## FIG. 22

EP 1 465 451 A2

504

| WIRELESS INTERFACE 510 | SYSTEM IDENTIFIER (N) 520 | PRIORITY (P) OF CONNECTION 530 | CONNECTION INITIATION WIRELESS-LINK QUALITY THRESHOLD (Q1) 540 | AUTOMATIC CONNECTION FLAG (F1) 550 | CONNECTION TERMINATION WIRELESS-LINK QUALITY THRESHOLD (Q2) 560 | AUTOMATIC DISCONNECTION FLAG (F2) 570 | CONNECTION STATUS CHANGE NOTIFICATION FLAG (F3) 580 |
|---|---|---|---|---|---|---|---|
| WLAN 511 | OFFICE 1 521 | 7 531 | 5 dB 541 | ON 551 | 0 dB 561 | ON 571 | OFF 581 |
| WLAN 512 | LOUNGE 1 522 | 4 532 | 8 dB 542 | ON 552 | 0 dB 562 | ON 572 | OFF 582 |
| WLAN 513 | LOUNGE 2 523 | 2 533 | 15 dB 543 | ON 553 | 3 dB 563 | ON 573 | OFF 583 |
| WLAN 514 | PUBLIC 1 524 | 1 534 | 15 dB 544 | ON 554 | 5 dB 564 | ON 574 | ON 584 |
| Cellular 515 | PUBLIC 2 525 | 1 535 | N/A 535 | OFF 555 | N/A 565 | OFF 575 | ON 585 |

# FIG. 23

730 INITIATING CONNECTION/ DISCONNECTION NOTIFICATION PROCESS OF WIRELESS SYSTEMS

731 CONNECTION TO NEW WIRELESS SYSTEM

736 DISCONNECTION FROM WIRELESS SYSTEM IN CONNECTION

732 CONNECTION STATUS CHANGE NOTIFICATION FLAG OF WIRELESS SYSTEM TO WHICH CONNECTION WAS NEWLY MADE F3 = ON?  NO / YES

737 CONNECTION STATUS CHANGE NOTIFICATION FLAG OF WIRELESS SYSTEM TO WHICH CONNECTION WAS DISCONNECTED F3 = ON?  NO / YES

733 POP-UP DISPLAY OF "CONNECTION INITIATION (WIRELESS SYSTEM NAME)"

738 POP-UP DISPLAY OF "CONNECTION TERMINATION (WIRELESS SYSTEM NAME)"

734 GENERATION OF BEEP SOUND FOR NOTIFYING CONNECTION INITIATION

739 GENERATION OF BEEP SOUND FOR NOTIFYING CONNECTION TERMINATION

735 END

740 END

## FIG. 24

EP 1 465 451 A2

505

| WIRELESS INTERFACE 510 | SYSTEM IDENTIFIER (N) 520 | PRIORITY (P) OF CONNECTION 530 | CONNECTION INITIATION WIRELESS-LINK QUALITY THRESHOLD (Q1) 540 | AUTOMATIC CONNECTION FLAG (F1) 550 | CONNECTION TERMINATION WIRELESS-LINK QUALITY THRESHOLD (Q2) 560 | AUTOMATIC DISCONNECTION FLAG (F2) 570 | CONNECTION STATUS CHANGE NOTIFICATION FLAG (F3) 580 | AUTHENTICATION REQUEST FLAG (F4) 590 |
|---|---|---|---|---|---|---|---|---|
| WLAN 511 | OFFICE 1 521 | 7 531 | 5 dB 541 | ON 551 | 0 dB 561 | ON 571 | OFF 581 | ON 591 |
| WLAN 512 | LOUNGE 1 522 | 4 532 | 8 dB 542 | ON 552 | 0 dB 562 | ON 572 | OFF 582 | ON 592 |
| WLAN 513 | LOUNGE 2 523 | 2 533 | 15 dB 543 | ON 553 | 3 dB 563 | ON 573 | OFF 583 | ON 593 |
| WLAN 514 | PUBLIC 1 524 | 1 534 | 15 dB 544 | ON 554 | 5 dB 564 | ON 574 | ON 584 | ON 594 |
| Cellular 515 | PUBLIC 2 525 | 1 535 | N/A 535 | OFF 555 | N/A 565 | OFF 575 | ON 585 | OFF 595 |

# FIG. 25

760 — INITIATING INITIAL AUTHENTICATION PROCESS OF WIRELESS SYSTEMS

761 — CONNECTION TO NEW WIRELESS SYSTEM

762 — AUTHENTICATION REQUEST FLAG OF WIRELESS SYSTEM TO WHICH CONNECTION WAS NEWLY MADE F4 = ON?

→ NO → 763 ⊗ END

YES

764 — STARTING WEB BROWSER

765 — ESTABLISHING TLS SESSION

766 — DISPLAY OF AUTHENTICATION INFORMATION INPUT REQUEST SCREEN

767 — INPUTTING AUTHENTICATION INFORMATION FROM USER

768 — TRANSMITTING AUTHENTICATION INFORMATION TO WIRELESS SYSTEM TO WHICH CONNECTION WAS NEWLY MADE

769 — ACQUIRING AUTHENTICATION RESULT FROM WIRELESS SYSTEM

770 — AUTHENTICATION SUCCEEDED?

→ NO → 771 — GIVING INSTRUCTION FOR DISPLAY UPDATE TO CONNECTION STATUS DISPLAY MEANS → 772 ⊗ END

YES

773 — ACQUIRING WIRELESS SIGNAL CRYPTOGRAPHY KEY FROM WIRELESS SYSTEM

774 — SETTING ACQUIRED WIRELESS SIGNAL CRYPTOGRAPHY KEY FOR WIRELESS TRANSMITTER AND WIRELESS RECEIVER

775 — GIVING INSTRUCTION FOR DISPLAY UPDATE TO CONNECTION STATUS DISPLAY MEANS

776 ⊗ END

# FIG. 26

951

| DESTINATION WIRELESS-TERMINAL IDENTIFIER = BROADCAST |
|---|
| 960 |
| TRANSMISSION SOURCE BASE STATION IDENTIFIER |
| 961 |
| PACKET CLASSIFICATION = WIRELESS SYSTEM INFORMATION |
| 962 |
| WIRELESS SYSTEM IDENTIFIER (N) |
| 963 |
| PRIORITY OF CONNECTION (P) |
| 964 |
| CONNECTION INITIATION WIRELESS-LINK QUALITY THRESHOLD (Q1) |
| 965 |
| AUTOMATIC CONNECTION FLAG (F1) |
| 966 |
| CONNECTION TERMINATION WIRELESS-LINK QUALITY THRESHOLD (Q2) |
| 967 |
| AUTOMATIC DISCONNECTION FLAG (F2) |
| 968 |
| CONNECTION STATUS CHANGE NOTIFICATION FLAG (F3) |
| 969 |
| AUTHENTICATION REQUEST FLAG (F4) |
| 970 |

## FIG. 27

840 — INITIATING REGISTRATION/UPDATE PROCESS OF WIRELESS SYSTEM INFORMATION

841 — INPUTTING WIRELESS SYSTEM INFORMATION RECEIVED FROM WIRELESS SYSTEM INFORMATION ACQUISITION CIRCUIT

842 — WIRELESS INTERFACE INFORMATION AND WIRELESS SYSTEM IDENTIFIER N THAT WERE INPUT WERE ALREADY REGISTERED? —NO→ 843 ⊗ END

YES

844 — DESIGNATION FOR PRIORITY P OF CONNECTION BY USER EXISTS? —NO→ 846 PRIORITY P OF CONNECTION EXISTS IN RECEIVED WIRELESS SYSTEM INFORMATION?

YES / NO

845 — USING P = CURRENT PRIORITY AS IT STANDS

YES 847 — P = RECEIVED PRIORITY OF CONNECTION

848 — DESIGNATION FOR CONNECTION INITIATION WIRELESS-LINK QUALITY THRESHOLD (Q1) BY USER EXISTS? —NO→ 850 CONNECTION INITIATION WIRELESS-LINK QUALITY THRESHOLD (Q1) EXISTS IN RECEIVED WIRELESS SYSTEM INFORMATION?

YES / NO

849 — SETTING Q1 = CURRENT CONNECTION INITIATION WIRELESS-LINK QUALITY THRESHOLD AS IT STANDS

YES 851 — Q1= RECEIVED CONNECTION INITIATION WIRELESS-LINK QUALITY THRESHOLD

852 — DESIGNATION FOR CONNECTION TERMINATION WIRELESS-LINK QUALITY THRESHOLD (Q2) BY USER EXISTS? —NO→ 854 CONNECTION TERMINATION WIRELESS-LINK QUALITY THRESHOLD (Q2) EXISTS IN RECEIVED WIRELESS SYSTEM INFORMATION?

YES / NO

853 — SETTING Q2 = CURRENT CONNECTION TERMINATION WIRELESS-LINK QUALITY THRESHOLD AS IT STANDS

YES 855 — Q2 = RECEIVED CONNECTION TERMINATION WIRELESS-LINK QUALITY THRESHOLD

856 — DESIGNATION FOR AUTOMATIC CONNECTION FLAG (F1) BY USER EXISTS? —NO→ 858 AUTOMATIC CONNECTION FLAG (F1) EXISTS IN RECEIVED WIRELESS SYSTEM INFORMATION?

YES / NO

857 — SETTING F1 = CURRENT VALUE OF AUTOMATIC CONNECTION FLAG AS IT STANDS

YES 859 — F1 = RECEIVED AUTOMATIC CONNECTION FLAG

A

# FIG. 28

A

860 — DESIGNATION FOR AUTOMATIC DISCONNECTION FLAG (F2) BY USER EXISTS?

→ NO → 862 AUTOMATIC DISCONNECTION FLAG (F2) EXISTS IN RECEIVED WIRELESS-SYSTEM INFORMATION?

YES

NO ←

861 — SETTING F2 = CURRENT VALUE OF AUTOMATIC DISCONNECTION FLAG AS IT STANDS

YES 863 F2 = RECEIVED AUTOMATIC DISCONNECTION FLAG

864 — DESIGNATION FOR CONNECTION STATUS CHANGE NOTIFICATION FLAG (F3) BY USER EXISTS?

→ NO → 866 CONNECTION STATUS CHANGE NOTIFICATION FLAG (F3) EXISTS IN RECEIVED WIRELESS-SYSTEM INFORMATION?

YES

NO ←

865 — SETTING F3 = CURRENT VALUE OF CONNECTION STATUS CHANGE NOTIFICATION FLAG AS IT STANDS

YES 867 F3 = RECEIVED CONNECTION STATUS CHANGE NOTIFICATION FLAG

868 — DESIGNATION FOR AUTHENTICATION REQUEST FLAG (F4) BY USER EXISTS?

→ NO → 870 AUTHENTICATION REQUEST FLAG (F4) EXISTS IN RECEIVED WIRELESS-SYSTEM INFORMATION?

YES

NO ←

869 — SETTING F4 = CURRENT VALUE OF AUTHENTICATION REQUEST FLAG AS IT STANDS

YES 871 F4 = RECEIVED AUTHENTICATION REQUEST FLAG

872 — OUTPUTTING REGISTERED/UPDATED INFORMATION OF WIRELESS SYSTEM TO THE HANDOVER DETERMINATION MEANS

873 — GIVING INSTRUCTION FOR DISPLAY UPDATE TO CONNECTION STATUS DISPLAY MEANS

874 END

# FIG. 29

952

| |
|---|
| DESTINATION WIRELESS-TERMINAL IDENTIFIER = BROADCAST<br>960 |
| TRANSMISSION SOURCE BASE STATION IDENTIFIER<br>961 |
| PACKET CLASSIFICATION = WIRELESS SYSTEM INFORMATION<br>962 |
| WIRELESS SYSTEM IDENTIFIER (N)<br>963 |
| OFFER-ENABLE THROUGHPUT (S)<br>980 |

# FIG. 30

880 — INITIATING REGISTRATION/UPDATE PROCESS OF WIRELESS SYSTEM INFORMATION

881 — INPUTTING WIRELESS SYSTEM INFORMATION RECEIVED FROM WIRELESS SYSTEM INFORMATION ACQUISITION CIRCUIT

882 — WIRELESS INTERFACE INFORMATION AND WIRELESS SYSTEM IDENTIFIER N THAT WERE INPUT WERE ALREADY REGISTERED? — NO → 883 END

YES

884 — OFFER-ENABLE THROUGHPUT S EXISTS IN RECEIVED WIRELESS SYSTEM INFORMATION? — NO → 886 S = WIRELESS LINK PHYSICAL-VELOCITY OF ABOVE WIRELESS SYSTEM

YES

885 — S = RECEIVED OFFER-ENABLE THROUGHPUT

887 — SORTING ALL WIRELESS SYSTEMS ALREADY REGISTERED IN ORDER OF MAGNITUDE OF OFFER-ENABLE THROUGHPUT S

888 — Pmax = MAXIMUM PRIORITY
St = REFERENCE THROUGHPUT

889 — SELECTING WIRELESS SYSTEM INFORMATION ALREADY REGISTERED IN ORDER SORTED — NO NEXT WIRELESS SYSTEM EXISTS → 890 END

NEXT WIRELESS SYSTEM EXISTS

891 — $P = \min(P_{max}, |S/St|)$

892 — OUTPUTTING UPDATED CONNECTION PRIORITY P OF WIRELESS SYSTEM TO HANDOVER DETERMINATION MEANS

893 — GIVING INSTRUCTION FOR DISPLAY UPDATE TO CONNECTION STATUS DISPLAY MEANS

# FIG. 31

953

| |
|---|
| DESTINATION WIRELESS-TERMINAL IDENTIFIER = BROADCAST<br>960 |
| TRANSMISSION SOURCE BASE STATION IDENTIFIER<br>961 |
| PACKET CLASSIFICATION = WIRELESS SYSTEM INFORMATION<br>962 |
| WIRELESS SYSTEM IDENTIFIER (N)<br>963 |
| ACCOUNTING CONDITION (C)<br>990 |

## FIG. 32

900 — INITIATING REGISTRATION/UPDATE PROCESS OF WIRELESS SYSTEM INFORMATION

901 — INPUTTING WIRELESS SYSTEM INFORMATION RECEIVED FROM WIRELESS SYSTEM INFORMATION ACQUISITION CIRCUIT

902 — WIRELESS INTERFACE INFORMATION AND WIRELESS SYSTEM IDENTIFIER N THAT WERE INPUT WERE ALREADY REGISTERED? — NO — 903 END

YES

904 — ACCOUNTING CONDITION C EXISTS IN RECEIVED WIRELESS SYSTEM INFORMATION? — NO

YES

905 — C = RECEIVED ACCOUNTING CONDITION

906 — C = 0

907 — SORTING ALL WIRELESS SYSTEMS ALREADY REGISTERED IN ORDER OF MAGNITUDE OF ACCOUNTING CONDITION C

908 — Pmax = MAXIMUM PRIORITY
Ct = REFERENCE ACCOUNTING-CONDITION

909 — SELECTING WIRELESS SYSTEM INFORMATION ALREADY REGISTERED IN ORDER SORTED — NO NEXT WIRELESS SYSTEM EXISTS — 910 END

NEXT WIRELESS SYSTEM EXISTS

911 — $P = \max(0, P_{max} - |C/C_t|)$

912 — OUTPUTTING UPDATED CONNECTION PRIORITY P OF WIRELESS SYSTEM TO HANDOVER DETERMINATION MEANS

913 — GIVING INSTRUCTION FOR DISPLAY UPDATE TO CONNECTION STATUS DISPLAY MEANS

# FIG. 33

BASIC DATA BASE `1100` → CALCULATION CIRCUIT `1101` → TEMPORARY DATA MEMORY `1102`

RECEPTION CIRCUIT `1103`

`1105`

TRANSMISSION CIRCUIT `1104`

`1106`

# FIG. 34

| WIRELESS LINK | WIRELESS BASE STATION | WIRELESS SYSTEM MANAGEMENT SERVER |
|---|---|---|

THROUGHPUT INFORMATION OF WIRELESS LINK

1040

WIRELESS SYSTEM INFORMATION

1050

# FIG. 35

1200 — INITIATING NOTIFICATION PROCESS OF WIRELESS SYSTEM INFORMATION

1201 — RECEIVING OFFER-ENABLE THROUGHPUT FROM WIRELESS BASE STATION

1202 — RECEIVING OFFER-ENABLE THROUGHPUT FROM APPARATUS OF WIRE NETWORK

1203 — UPDATING OFFER-ENABLE THROUGHPUT S IN ABOVE WIRELESS BASE STATION

1204 — UPDATING PRIORITY P OF WIRELESS SYSTEM IN ABOVE WIRELESS BASE

1205 — UPDATING WIRELESS SYSTEM INFORMATION TO WRITE IT INTO MEMORY FOR TEMPORARY DATA

1206 — NOTIFYING WIRELESS SYSTEM INFORMATION WITHIN MEMORY FOR TEMPORARY DATA TO WIRELESS BASE STATION

1207

END

# FIG. 36
# PRIOR ART

# FIG. 37
# PRIOR ART